# EUROPÄISCHE PATENTSCHRIFT

(11) **EP 1 632 055 B1**
(45) Veröffentlichungstag und Bekanntmachung des Hinweises auf die Patenterteilung: **30.08.2006**
(21) Anmeldenummer: 04710782.6
(22) Anmeldetag: 13.02.2004
(51) Int. Cl.: H04L 12/18

(54) **VERFAHREN ZUM ÜBERMITTELN EINES NUTZERDATENSATZES AN EINE ANWENDERSTATION**
METHOD FOR TRANSMITTING A USER DATA RECORD TO A USER STATION
PROCEDE POUR TRANSMETTRE DES ENREGISTREMENTS UTILISATEURS A UNE STATION UTILISATEURS

(30) Priorität: 14.02.2003 DE 10306268
(43) Veröffentlichungstag der Anmeldung: 08.03.2006
(73) Patentinhaber: Virtual Paper eMedia Solutions GmbH, 44227 Dortmund (DE)
(72) Erfinder: SACK, Michael, 91171 Greding (DE)
(74) Vertreter: Müller, Thomas
(86) Internationale Anmeldenummer: PCT/DE2004/000274
(87) Internationale Veröffentlichungsnummer: WO 2004/073255

(56) Entgegenhaltungen:
- EP-A- 1 233 576
- WO-A-03/007635
- US-A- 5 959 989
- US-A1- 2001 054 115

## Beschreibung

Die Erfindung betrifft ein Verfahren zum Übermitteln eines Nutzerdatensatzes an eine Anwenderstation über ein Broadcastnetzwerke umfassendes Netzwerksystem.

Bei Broadcastnetzwerken besteht generell das Problem, dass es bei diesen nicht möglich ist, die Anwenderstation zu identifizieren, da Broadcastnetzwerke nur unidirektional arbeiten.

Damit können aber Broadcastnetzwerke umfassende Netzwerksysteme in all den Fällen nicht eingesetzt werden, in denen es zweckmäßig oder erforderlich ist, zu erkennen, über welche Broadcastnetzwerke ein Nutzerdatensatz übertragen wurde beziehungsweise können Anwendungen, für die dies zweckmäßig oder erforderlich ist, in einem Broadcastnetzwerke umfassenden Netzwerksysteme nicht oder nur in beschränktem Maß zum Einsatz kommen.

Bei der so genannten Konvergenz der Medien, das heißt dem Zusammenwachsen von verschiedenen Geräten wie TV und PC und dem damit einhergehenden Zusammenfluss digitaler Inhalte und Nutzerdaten entstehen auch neue Geschäftsmodelle. Diese sind stark auch vom Zusammenwachsen der unterschiedlichen Netzwerksysteme geprägt, da traditionelle Computemetzwerke wie das Internet wegen stetig steigender Übertragungsleistung für die Übertragung von digitalen Medien wie Video und Audio interessant werden und umgekehrt Broadcastnetzwerke für die Übertragung von Daten beziehungsweise Nutzerdaten in digitaler Form wegen der niedrigen Übertragungskosten genutzt werden. Die Verteilung von Nutzerdaten erfolgt in der Regel nicht nur über ein Netzwerk, sondern viel mehr über ein System mit aneinander angereihten Netzwerken. Dabei kann es sich sowohl um Broadcastnetzwerke als auch bidirektionale Netzwerke handeln.

Beispielsweise werden Nutzerdaten über ein bidirektionales Netzwerk wie Internet an eine Broadcastsendestation übertragen und von dort im Broadcastverfahren über Satellit verteilt. Diese Daten können über eine Netzwerkübergangsstation in einem Kabel TV Netz im Broadcastverfahren übertragen werden, um dann über ein wiederum bidirektionales Netz in eine Anwenderstation zu gelangen. Diese überträgt Informationen, die im Zusammenhang mit den Nutzerdaten stehen, über ein weiteres bidirektionales Netzwerk an eine Station zu Auswertung.

Die bisherigen Geschäftsmodelle sind sehr stark an den jeweils benutzten Netzwerksystemen orientiert und deshalb für Computemetzwerke, die bidirektional sind, anders als für die unidirektionalen Broadcastnetzwerke. Dies betrifft speziell die Informationen über den Pfad im Computernetzwerk, die zum Beispiel für eine Verteilung der mit einem Nutzerdatensatz erzielten Erlöse auf verschiedene an der Übertragung beteiligte Dienste Anbieter benutzt werden. Auf Grund der Unidirektionalität von Broadcastnetzwerken können solche Modelle nicht direkt abgebildet werden, wenn es nicht Verfahren gibt, mit denen solche Pfade auch in Netzwerken, die mindestens ein Broadcastnetzwerk beinhalten, bestimmt werden können.

Der Erfindung liegt daher die Aufgabe zugrunde, ein Verfahren zum Übermitteln eines Nutzerdatensatzes der eingangs beschriebenen Art zur Verfügung zu stellen, bei welchen die Nutzung zumindest des letzten der Broadcastnetzwerke des Netzwerksystems erkennbar ist.

Das Dokument D1: EP 1 233 576 A offenbart ein Verfahren der gleichen Art wie die Erfindung.

Diese Aufgabe wird gelöst durch das Verfahren mit den Merkmalen gemäß dem unabhängigen Patentanspruch 1. Weitere Vorteile, Merkmale, Details, Aspekte und Effekte der Erfindung ergeben sich aus den Unteransprüchen, der Beschreibung sowie den Zeichnungen.

Diese Aufgabe wird erfindungsgemäß durch ein Verfahren zum Übermitteln eines Nutzerdatensatzes an eine Anwenderstation mit folgenden Schritten gelöst:

Übertragen des Nutzerdatensatzes als Broadcastdatensatz über ein Netzwerksystem umfassend mindestens zwei zur Datenübertragung geeignete Netzwerke, von denen mindestens eines als Broadcastnetzwerk ausgebildet ist, bei welchen vor dem Übertragen in dem jeweiligen Broadcastnetzwerk eine Netzwerkidentifikation des zum Übertragen eingesetzten Broadcastnetzwerks dem Broadcastdatensatz entweder durch Ergänzen oder Überschreiben vorhandener Identifikationen hinzugefügt wird,
Extrahieren mindestens der zuletzt zu dem Broadcastdatensatz hinzugefügten Netzwerkidentifikation beim Empfang des zuletzt genutzten Broadcastdatensatzes aus diesem Broadcastdatensatz und
Weiterleiten mindestens der letzen Netzwerkidentifikation an die Anwenderstation zur Berücksichtigung mindestens der letzen Netzwerkidentifikation im Zusammenhang mit der Verwendung des Nutzerdatensatzes.

Die Erfindung ist nicht auf eine bestimmte Art und Anzahl von Netzwerken im Netzwerksystem beschränkt. Beispielsweise, jedoch nicht ausschließlich, kann das Netzwerksystem auch mindestens zwei zur Datenübertragung aufeinanderfolgende und/oder parallele Broadcastnetzwerke aufweisen. "Parallel" bedeutet in diesem Fall ganz generell, daß Daten den einen oder den anderen Datenpfad nutzen können. Einige nicht ausschließliche Beispiele für geeignete Architekturen des Netzwerksystems werden im weiteren Verlauf der Beschreibung näher erläutert.

Der Vorteil der erfindungsgemäßen Lösung ist darin zu sehen, dass die durch die Extraktion und Weiterleitung mindestens der zuletzt zu dem Broadcastdatensatz hinzugefügten Netzwerkidentifikation die Möglichkeit besteht, aufgrund der Kenntnis des Aufbaus des Netzwerksystems, festzustellen, über welches der Broadcastnetzwerke die Übertragung des Nutzerdatensatzes erfolgt ist und dies im Zusammenhang mit der Verwendung des Nutzerdatensatzes zu berücksichtigen.

Unter Broadcastdatensatz im Sinne dieser Erfindung ist ein Datensatz zu verstehen, der den Informationsgehalt des Nutzerdatensatzes umfasst.

Die Netzwerkidentifikation kann in beliebiger Art und Weise in den Broadcastdatensatz integriert oder diesem zugeordnet sein.

Der Broadcastdatensatz ergibt sich ferner aus der Gesamtheit der einander zugeordneten Informationen unabhängig davon, ob diese im Broadcastnetzwerk tatsächlich auf demselben Kanal oder auf mehreren Kanälen übertragen werden.

Ein besonders vorteilhaftes Ausführungsbeispiel des erfindungsgemäßen Verfahrens sieht vor, dass die Berücksichtigung der letzten Netzwerkidentifikation im Zusammenhang mit der Verwendung des Nutzerdatensatzes den Vergleich der letzten Netzwerkidentifikation mit einer der Anwenderstation vorgegebenen Netzwerkidentifikation zur Entscheidung über die Freigabe des Nutzerdatensatzes für die Anwenderstation umfasst.

Damit besteht die Möglichkeit, bereits über die Freigabe des Nutzerdatensatzes eine Vorselektion zu treffen.

Die Entscheidung über die Freigabe des Nutzerdatensatzes kann in unterschiedlichster Art und Weise getroffen werden.

Eine Möglichkeit sieht vor, dass die Entscheidung über die Freigabe des Nutzerdatensatzes dann positiv ist, wenn die letzte Netzwerkidentifikation mit der vorgegebenen Netzwerksidentifikation übereinstimmt.

Die Realisierung der Entscheidung über die Freigabe des Nutzerdatensatzes kann in unterschiedlichster Art und Weise erfolgen.

Eine vorteilhafte Lösung sieht vor, dass die Entscheidung über die Freigabe des Nutzerdatensatzes durch eine einem Zugriff auf den Nutzerdatensatz vorgeschaltete Filterfunktion selbsttätig erfolgt.

Hinsichtlich der Art der Übermittlung der vorgegebenen Netzwerkidentifikation an die Anwenderstation sind die unterschiedlichsten Möglichkeiten denkbar.

Eine Möglichkeit sieht vor, dass die vorgegebene Netzwerkidentifikation über das Netzwerksystem übertragen wird.

Eine andere vorteilhafte Lösung sieht vor, dass die vorgegebene Netzwerkidentifikation zur Anwenderstation über einen vom Netzwerksystem separaten Pfad übertragen wird.

Im Zusammenhang mit der bisherigen Erläuterung der erfindungsgemäßen Lösung wurde davon ausgegangen, dass mit der Netzwerkidentifikation mindestens das zuletzt zur Übertragung des Broadcastdatensatzes eingesetzte Broadcastnetzwerk erkennbar ist. Dies ist eine Mindestbedingung für das vorliegende Konzept.

Im Rahmen einer weiteren Ausgestaltung der erfindungsgemäßen Lösung ist es aber auch denkbar, dass zusätzlich zur letzten Netzwerkidentifikation mindestens eine weitere vorausgehende Netzwerkidentifikation aus dem Broadcastdatensatz extrahiert und an die Anwenderstation weitergeleitet wird.

In diesem Fall umfasst somit der Broadcastdatensatz nicht nur die letzte Netzwerkidentifikation, sondern er kann so aufgebaut sein, dass er auch vorausgehende Netzwerkidentifikationen umfasst, die sich dann auch beim Empfang des zuletzt genutzten Broadcastdatensatzes aus diesem Broadcastdatensatz extrahieren lassen.

Diese Lösung ist in all den Fällen von Vorteil, in denen das Netzwerksystem mehrere Pfade umfasst, über welche eine Übertragung des Nutzerdatensatzes zu einer bestimmten Anwenderstation erfolgen kann, so dass das Extrahieren der zuletzt zu dem Broadcastdatensatz hinzugefügten Netzwerkidentifikation nicht ausreichend sein kann, um den Pfad zurückzuverfolgen, über welchen der Nutzerdatensatz übertragen wurde.

Eine andere vorteilhafte Ausführungsform der erfindungsgemäßen Lösung sieht vor, dass die dem Broadcastdatensatz hinzugefügte Netzwerkidentifikation eine Identifikation mindestens eines vorangehend genutzten Broadcastnetzwerks zulässt.

In diesem Fall ist die Netzwerkidentifikation nicht nur so aufgebaut, dass sie nur eine Identifikation des zuletzt von dem Broadcastdatensatz mit dieser Netzwerksidentifikation genutzten Broadcastnetzwerks zulässt, sondern auch gleichzeitig noch Informationen über vorausgehend genutzte Broadcastnetzwerke zulässt, so dass das Extrahieren der zuletzt zu dem Broadcastdatensatz hinzugefügten Netzwerkidentifikation auch bei mehreren Übertragungspfaden ausreichend ist, um festzustellen, welcher der mehreren Übertragungspfade genutzt wurde.

Hinsichtlich der Art des Weiterleitens der letzten Netzwerkidentifikation zu der Anwenderstation wurden bislang keine weiteren Angaben gemacht. So sieht eine vorteilhafte Lösung vor, dass das Weiterleiten mindestens der letzten Netzwerkidentifikation zu der Anwenderstation das Übertragen derselben als eigenständige Information erfasst.

Dabei kann für das Übertragen mindestens der letzten Netzwerkidentifikation an die Anwenderstation ein eigener Übertragungspfad vorgesehen sein.

Eine besonders günstige Lösung sieht jedoch vor, dass das Weiterleiten mindestens der letzten Netzwerkidentifikation zu der Anwenderstation über einen Übertragungspfad für den Nutzerdatensatz erfolgt.

Hinsichtlich der Berücksichtigung der letzten Netzwerkidentifikation im Zusammenhang mit der Verwendung des Nutzerdatensatzes wurden ebenfalls noch keine näheren Angaben gemacht.

Eine im Rahmen der Erfindung besonders vorteilhafte Lösung sieht vor, dass die Berücksichtigung mindestens der letzten Netzwerkidentifikation im Zusammenhang mit der Verwendung des Nutzerdatensatzes ein Weiterleiten mindestens der letzten Netzwerkidentifikation en eine Erfassungsstation für die Verwendung des Nutzerdatensatzes im Fall eines Zugriffs auf den Nutzerdatensatz durch die Anwenderstation umfasst.

Diese erfindungsgemäße Lösung schafft insbesondere die Möglichkeit, in der Erfassungsstation zu erkennen, über welches Broadcastnetzwerk der Nutzerdatensatz der Anwenderstation übermittelt wurde, da aufgrund der Struktur des Netzwerksystems aus dem zuletzt genutzten Broadcastnetzwerk auch auf die voranstehend genutzten Broadcastnetzwerke geschlossen werden kann.

Insbesondere dient dabei die Erfassungsstation dazu, die Nutzung der Broadcastnetzwerke eines Netzwerksystems zu ermitteln.

Besonders günstig ist es, wenn die Weiterleitung mindestens der letzten Netzwerkidentifikation an die Erfassungsstation zusammen mit Verwendungsinformationen der Anwenderstaton erfolgt, da dann zusätzlich auch noch in der Erfassungsstation Angaben über die Verwendung des Nutzerdatensatzes festgehalten werden können.

Besonders günstig ist es dabei, wenn die Verwendungsinformationen Informationen über den Nutzerdatensatz umfassen.

Ferner ist es vorteilhaft, wenn die Verwendungsinformationen Anwenderinformationen umfassen.

Die Anwenderinformation kann vielfältig sein.

Eine vorteilhafte Lösung sieht vor, dass die Anwenderinformation eine Anwenderidentifikation umfasst.

Alternativ oder ergänzend zu einer Anwenderinformation ist vorzugsweise vorgesehen, dass die Anwenderinformation Informationen über Anwenderaktivitäten, insbesondere im Zusammenhang mit dem Nutzerdatensatz, umfasst.

Die Weiterleitung mindestens der letzten Netzwerkidentifikation an die Erfassungsstation erfolgt vorzugsweise über einen vom Netzwerksystem separaten Übertragungspfad.

Ein derartiger Übertragungspfad kann beispielsweise eine Telefonleitung oder das Internet sein.

Hinsichtlich der Funktion der Erfassungsstation ist vorzugsweise vorgesehen, dass diese die letzte Netzwerkidentifikation und die Verwendungsinformation gemeinsam auswertet.

Vorzugsweise ist dabei die Erfassungsstation so ausgebildet, dass mindestens die letzte Netzwerkidentifikation zumindest mit Teilen der Verwendungsinformation weitergeleitet wird, wobei die Weiterleitung beispielsweise zu Abrechnungszwecken erfolgen kann.

Hinsichtlich der Art der Erfassungsstation ist es ferner vorteilhaft, wenn diese gleichzeitig dazu dient, mit der Anwenderstation hinsichtlich der Autorisierung zur Nutzung des Nutzerdatensatzes zu kommunizieren.

Beispielsweise erfolgt die Autorisierung derart, dass der Anwenderstation ein Schlüssel zur Entschlüsselung des verschlüsselt übermittelten Nutzerdatensatzes zur Verfügung gestellt wird.

Ferner ist vorzugsweise vorgesehen, dass gleichzeitig mit dem Zugriff auf den Nutzerdatensatz in der Anwenderstation oder gleichzeitig mit der Übermittlung des Schlüssels zur Entschlüsselung des verschlüsselten Nutzerdatensatzes dem Inhaber der Anwenderstation Kosten für die Nutzung des Nutzerdatensatzes in Rechnung gestellt werden.

Eine weitere Ausführungsform sieht ein "virtuelles" Netzwerk in Form der Weitergabe des Nutzerdatensatzes von einer Empfangsstation an eine Anwenderstation auf einem physikalischen Medium vor. In diesem Fall kann eine eindeutige Identifikation des Ausgabeeinheit der Empfangsstation als Netzwerkidentifikation betrachtet werden, wie zum Beispiel, jedoch nicht ausschließlich, ein Diskettenlaufwerk oder ein optisches Laufwerk der Erfassungsstation.

Ferner ist vorzugsweise vorgesehen, bei der Übertragung über mehrere Netzwerke, darunter mindestens ein Broadcastnetzwerk, in einer Netzwerkübergangsstation die mit dem Nutzerdatensatz übermittelte zumindest letzte Netzwerkidentifikation als Kriterium für die Weiterleitung des Nutzerdatensatzes heran zu ziehen. Zwei identische Nutzerdatensätze, die sich jedoch durch zumindest die letzte Netzwerkidentifikation und damit durch den Übertragungsweg unterscheiden, könnten von der Netzwerkübergangsstation auf unterschiedlichen Wegen weitergeleitet werden.

Dies kann besonders vorteilhaft sein, wenn ein Anbieter einen bestimmten Nutzerdatensatz mit vorgegebenen Regeln zur Weitergabe über ein Netzwerk, das zumindest ein Broadcastnetzwerk umfasst, überträgt und ein zweiter Anbieter den selben Nutzerdatensatz mit anderen Regeln zur Weitergabe über ein anderes Netzwerk an die selbe Erfassungsstation überträgt. In diesem Fall kann in einer bestimmten Ausführung der Erfindung die übermittelte Netzwerkidentifikation von der Erfassungsstation als Kriterium für die Weitergabe an eine Anwenderstation beispielsweise auf einem lokalen Netzwerk oder über ein virtuelles Netzwerk, wie es oben beschrieben ist, das heißt mit einem physikalischen Medium, benutzen.

In weiterer Ausgestaltung kann die Berücksichtigung mindestens der bis dahin letzten Netzwerkidentifikation (NID D1 bzw. NID D2) bei der Erstellung eines Broadcastdatensatzes für die Weiterleitung in unterschiedliche Netzwerke des Netzwerksystems von der jeweiligen nachgeschalteten Empfangsstation einer Netzwerkübergangsstation zur Identifizierung benutzt werden und eine Übertragung in dem zu dieser Netzwerkübergangsstation gehörigen Netzwerk davon abhängig sein, wobei die Abhängigkeit vordefiniert sein kann.

Auch kann vorgesehen sein, dass mindestens die bis dahin letzte Netzwerkidentifikation (NID D1 bzw. NID D2) in einer Netzwerkübertragungsstation für die Übertragung in unterschiedliche Netzwerke des Netzwerksystems, die von dieser Netzwerkübertragungsstation ausgehen, zur Identifizierung benutzt wird und eine Übertragung in das jeweilige Netzwerk davon abhängig ist, wobei die Abhängigkeit vordefiniert sein kann.

Vorzugsweise kann es sich bei wenigstens einem Netzwerk um ein bidirektionales Netzwerk, insbesondere um ein Netzwerk nach dem TCP/IP Standard, handeln.

Vorteilhaft kann es sich bei dem Übertragungspfad um ein Netzwerk nach dem TCP/IP Standard handeln.

Vorzugsweise kann es sich bei wenigstens einem Broadcastnetzwerk um ein digitales Broadcastnetzwerk handeln. Ganz besonders bevorzugt kann es sich bei wenigstens einem Broadcastnetzwerk um ein digitales Broadcastnetzwerk nach dem DVB Standard handeln.

In weiterer Ausgestaltung können eine Empfangsstation und die Anwenderstation des Teilnehmers zwei physikalisch getrennte Geräte sein, die auch nicht über ein Netzwerk miteinander verbunden sind, wobei der Nutzerdatensatz über ein Speichermedium und dafür vorgesehene Schnittstellen in der Empfangsstation sowie in der Anwenderstation von der Empfangsstation zur Anwenderstation übertragen wird.

Dabei kann es sich bei dem Speichermedium beispielsweise um einen Flashspeicher oder dergleichen handeln.

Die Schnittstelle kann beispielsweise als USB Schnittstelle oder dergleichen ausgebildet sein..

Weitere Merkmale und Vorteile der Erfindung sind Gegenstand der nachfolgenden Beschreibung sowie der zeichnerischen einiger Ausführungsbeispiele des erfindungsgemäßen Verfahrens.

In der Zeichnung zeigen:
- Fig. 1:: eine schematische Darstellung eines ersten Beispieles eines Netzwerksystems mit Broadcastnetzwerken;
- Fig. 2:: ein erstes Ausführungsbeispiel eines erfindungsgemäßen Verfahrens bei dem Netzwerksystem gemäß Fig. 1;
- Fig. 3:: ein zweites Ausführungsbeispiel eines erfindungsgemäßen Verfahrens bei dem Netzwerksystem gemäß Fig. 1;
- Fig. 4:: ein drittes Ausführungsbeispiel eines erfindungsgemäßen Verfahrens bei dem Netzwerksystem gemäß Fig. 1;
- Fig. 5:: ein viertes Ausführungsbeispiel eines erfindungsgemäßen Verfahrens bei dem Netzwerksystem gemäß Fig. 1;
- Fig. 6:: ein fünftes Ausführungsbeispiel eines erfindungsgemäßen Verfahrens bei dem Netzwerksystem gemäß Fig. 1;
- Fig. 7:: ein sechstes Ausführungsbeispiel eines erfindungsgemäßen Verfahrens bei dem Netzwerksystem gemäß Fig. 1;
- Fig. 8:: eine schematische Darstellung eines zweiten Beispiels eines Netzwerksystems mit Broadcastnetzwerken;
- Fig. 9:: ein siebtes Ausführungsbeispiel eines erfindungsgemäßen Verfahrens bei dem Netzwerksystem gemäß Fig. 8;
- Fig.10:: ein achtes Ausführungsbeispiel eines erfindungsgemäßen Verfahrens bei dem Netzwerksystem gemäß Fig. 8;
- Fig. 11:: eine schematische Darstellung eines dritten Beispiels eines Netzwerksystems mit Broadcastnetzwerken;
- Fig. 12:: ein neuntes Ausführungsbeispiel eines erfindungsgemäßen Verfahrens bei dem Netzwerksystem gemäß Fig. 11;
- Fig. 13:: eine schematische Darstellung eines vierten Beispiels eines Netzwerksystems mit Broadcastnetzwerken;
- Fig. 14:: ein zehntes Ausführungsbeispiel eines erfindungsgemäßen Verfahrens bei dem Netzwerksystem gemäß Fig. 13; und
- Fig. 15:: ein elftes Ausführungsbeispiel eines erfindungsgemäßen Verfahrens mit einem "virtuellen" Netzwerk.

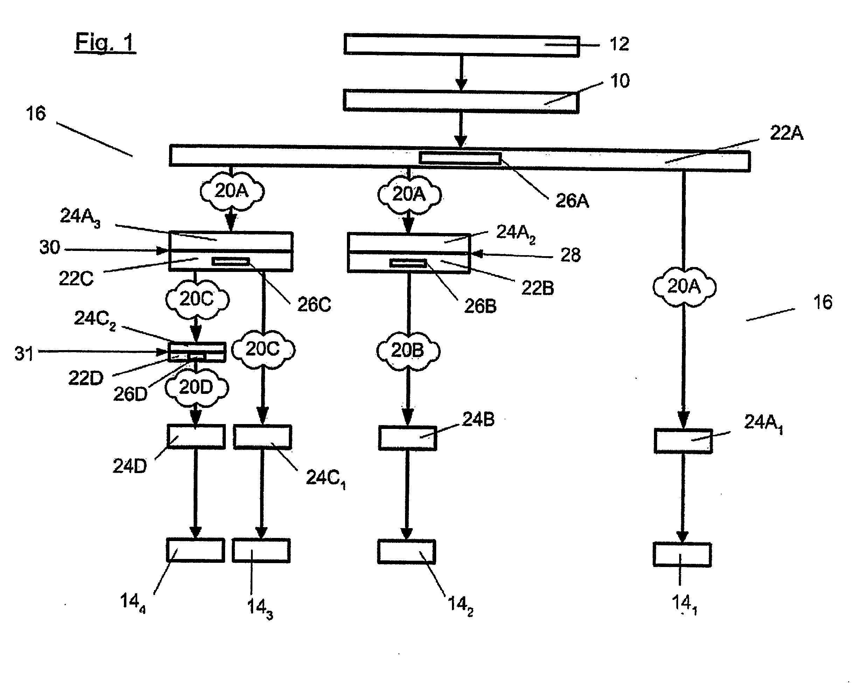

Eine Übermittlung eines Nutzerdatensatzes 10 eines Eigentümers 12 der Nutzerdaten zu Anwenderstation 14 dieser Nutzerdaten 10, beispielsweise zu den Anwenderstationen 14₁ bis 14₄ in Fig. 1, erfolgt erfindungsgemäß über ein erstes Beispiel eines Netzwerksystems 16, welches mehrere Broadcastnetzwerke 20 umfasst, bei denen jeweils eine Sendestation 22 mit in der Regel einer Vielzahl von Empfangsstationen 24 zusammenwirkt.

Beispielsweise umfasst ein erstes Broadcastnetzwerk 20A, wie in Fig. 1 dargestellt, die Sendestation 22A, in welcher Nutzerdatensatz 10 entsprechend einem für das erste Broadcastnetzwerk 20A vorgesehenen Kommunikationsprotokoll in einem Broadcastdatensatz 26A umgesetzt wird, welcher dann über das erste Broadcastnetzwerk 20A von der Sendestation 22A zu den Empfangsstationen 24A übertragen wird.

Dabei ist eine der Empfangsstationen 24A₁ einer Anwenderstation14₁ zugeordnet, welcher der in dem Broadcastdatensatz 26A enthaltene Nutzerdatensatz 10 von der Empfangsstation 24A₁ mittelbar oder unmittelbar zur Verfügung gestellt wird.

Andere Empfangsstationen, beispielsweise die Empfangsstation 24A₂ sind jedoch keinem Nutzer zugeordnet, sondern Teil einer Netzwerkübergangsstation 28, in welcher der Broadcastdatensatz 26A in einen Broadcastdatensatz 26B umgeändert wird und dann von der Sendestation 22B des zweiten Broadcastnetzwerks 20B zu einer von dessen Empfangsstationen 24B übertragen wird.

Die Empfangsstation 24B ist dabei der Anwenderstation 14₂ zugeordnet, welcher der in dem Broadcastdatensatz 26B enthaltene Nutzerdatensatz 10 ebenfalls mittelbar oder unmittelbar zur Verfügung gestellt wird.

Eine weitere Empfangsstation des ersten Broadcastnetzwerks 20A, beispielsweise die Empfangsstation 24A₃ ist Teil einer weiteren Netzwerkübergangsstation 30, in welcher der Broadcastdatensatz 26A in den Broadcastdatensatz 26C umgesetzt und durch die Sendestation 22C des dritten Broadcastnetzwerks 20C einer der Empfangsstationen 24C desselben übermittelt wird.

Die Empfangsstation 24C₂ ist nun ihrerseits ebenfalls nicht einer Anwenderstation 14 zugeordnet, sondern Teil einer weiteren Netzwerkübergangsstation 31, in welcher der Broadcastdatensatz 26C in einen Broadcastdatensatz 26D umgesetzt und durch die Sendestation 22D des vierten Broadcastnetzwerks 20D zur Empfangsstation 24D übermittelt wird, der nun ihrerseits der Anwenderstation 14₄ mittelbar oder unmittelbar zugeordnet ist, welcher der in dem Broadcastdatensatz 26D enthaltenen Nutzerdatensatz 10 ebenfalls mittelbar oder unmittelbar zur Verfügung gestellt wird.

Dadurch, dass Broadcastnetzwerke, wie die Broadcastnetzwerke 20A, 20B, 20C und 20D sich dadurch auszeichnen, dass mit diesen keine Rückmeldungen hinsichtlich der Empfangsstation 24, zu der die Broadcastdatensätze 26 übertragen werden, ist es bei dem Netzwerksystem 16 nicht möglich, nachzuvollziehen, über welche der Broadcastnetzwerke 20A, 20B, 20C und 20D der Nutzerdatensatz 10 die jeweiligen Anwenderstationen 14₁ bis 14₄ erreicht hat.

Aus diesem Grund werden die Broadcastnetzwerke 20A, 20B, 20C und 20D des erfindungsgemäßen Netzwerksystems 16 als unidirektionale Netzwerke bezeichnet.

Dieses Problem der Broadcastnetzwerke 20A bis 20D wird durch die vorliegende Erfindung gelöst, wie sie anhand einzelner Ausführungsbeispiele nachfolgend beschrieben ist, wobei zur Vereinfachung der Darstellung der Erfindung von einer Konstellation ausgegangen wird, bei welcher die Übermittlung des Nutzerdatensatzes 10 über das in Fig. 1 dargestellte erste Broadcastnetzwerk 20A und das zweite Broadcastnetzwerk 20B zu der Anwenderstation 14₂ erfolgt.

Für die Übermittlung des Nutzerdatensatzes 10 über die anderen Pfade des eingangs dargestellten Netzwerksystems 16 ergeben sich bei analoger Anwendung der nachstehenden Ausführungen zu den einzelnen Ausführungsbeispielen analoge Verhältnisse.

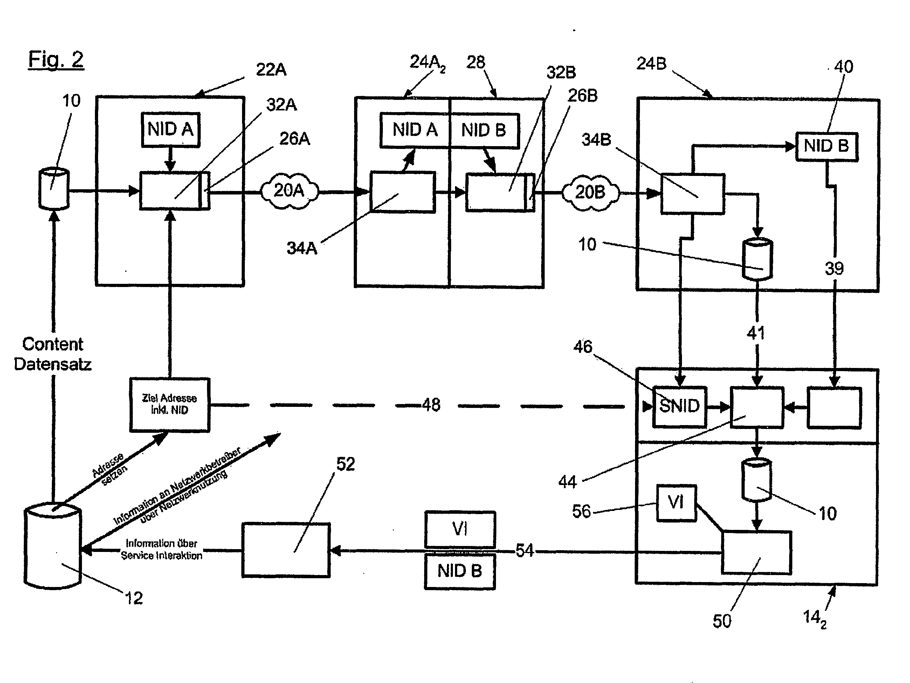

Das erste, in Fig. 2 dargestellte Ausführungsbeispiel einer erfindungsgemäßen Lösung sieht vor, dass der Nutzerdatensatz 10 in der Sendestation 22A des ersten Broadcastnetzwerks 20A durch Anwendung des dem ersten Broadcastnetzwerk 20A zugeordneten Kommunikationsprotokolls in den Broadcastdatensatz 26A durch einen Sender 32A umgesetzt wird, wobei der Sender 32A in dem Broadcastdatensatz 26A eine Netzwerkidentifikation NID A vermerkt, die somit durch den Broadcastdatensatz 26A mitübertragen wird.

In der Empfangsstation 24A₂ des ersten Broadcastnetzwerks 20A, die Teil der Netzwerkübergangsstation 28 ist, wird durch einen Empfänger 34 aus dem Broadcastdatensatz 26A die Netzwerkidentifikation NID A entfernt, da die Übertragung durch das erste Broadcastnetzwerk 20A abgeschlossen ist.

Ferner wird der Broadcastdatensatz 26A einem Sender 32B des zweiten Broadcastnetzwerks 20B übermittelt, welcher zumindest den Broadcastdatensatz 26A dahingehend ändert, dass an Stelle der Netzwerkidentifikation NID A die Netzwerkidentifikation NID B vermerkt wird, und welcher dann den Broadcastdatensatz 26B der Empfangsstation 24B des zweiten Broadcastnetzwerks 20B übermittelt.

Der von einem Empfänger 34B in der Empfangsstation 24B empfangene Broadcastdatensatz 26B enthält nach wie vor die Netzwerkidentifikation NID B und diese wird von dem Empfänger 34B, da dieser der Empfänger des zuletzt genutzten Broadcastnetzwerks 20B ist, extrahiert und entweder direkt über einen Pfad 39 der Anwenderstation 14₂ übermittelt oder vor Übermittlung beispielsweise in der Empfangsstation 24B in einem Speicher 40 gespeichert.

Gleichzeitig extrahiert der Empfänger 34B den Nutzerdatensatz 10 aus dem Broadcastdatensatz 26B und übermittelt diesen, im Fall des ersten Ausführungsbeispiels gemäß Fig. 2, unmittelbar über einen Pfad 41 der Anwenderstation 14₂. Bei den Anwenderstationen 14₂ erfolgt zunächst in einer Stufe 42 eine Freigabeprüfung. Hierzu wird der Stufe 42 einerseits die in dem Speicher 40 gespeicherte und vom Empfänger 34B extrahierte Netzwerkidentifikation NID B übermittelt, die einen Filter 44 mit einer als Sollwert vorgegebenen Netzwerkidentifikation SNID vergleicht, die beispielsweise in einem Sollvorgabenspeicher 46 abgespeichert ist.

Die Sollwertnetzwerkidentifikation SNID kann beispielsweise vor Übermittlung des Nutzerdatensatzes 10 über das Broadcastnetzwerk 20A und 20B übermittelt werden, wobei in der Empfängerstation 24B der Empfänger 34 die Sollwertnetzwerkidentifikation SNID extrahiert und an die Anwenderstation 14₂ weiterleitet, welche diese dann in dem Sollvorgabenspeicher 46 abspeichert.

Es ist aber auch denkbar, über eine separaten Pfad 48 die Sollwertnetzwerkidentifikation SNID in dem Sollvorgabenspeicher 46 zu speichern.

Zusätzlich kann die Freigabeprüfung in der Stufe 42 noch erweitert werden, beispielsweise durch Prüfung der Empfängeradresse des Empfängers 34B und Vergleich mit einer als Sollvorgabe vorgegebenen Empfängeradresse.

Ist die Freigabeprüfung positiv, das heißt stimmt mindestens die Sollwertnetzwerkidentifikation SNID mit der Netzwerkidentifikation NID B überein, so wird der Nutzerdatensatz 10 zum Zugriff seitens der Anwenderstation 14₂ freigegeben.

Im einfachsten Fall der erfindungsgemäßen Lösung kann nach der Freigabe des Nutzerdatensatzes 10 zum Zugriff ein beliebiger Zugriff auf Seiten der Anwenderstation 14₂ erfolgen.

Dies ist bei all den Anwenderstationen 14₁ bis 14₄ realisierbar, die mit der Stufe 42 zur Freigabeprüfung ausgerüstet sind. In diesem Fall kann dann bei den Anwenderstationen 14₁, 14₃ und 14₄ der Zugriff auf den Nutzerdatensatz 10 dadurch verhindert werden, dass bei der Freigabeprüfung erkannt wird, dass die in der jeweiligen Empfangsstation 24A₁, 24C und 24D extrahierte Netzwerkidentifikation nicht der Netzwerkidentifikation NID B entspricht.

Der Anwenderstation 14₂ ist ferner noch eine Stufe 50 zur Zugriffserkennung auf den Nutzerdatensatz 10 zugeordnet, welcher ebenfalls die Netzwerkidentifikation NID B zur Verfügung gestellt wird.

Die Stufe 50 erkennt einen Zugriff auf den Nutzerdatensatz 10 und meldet im Fall eines Zugriffs auf den Nutzerdatensatz 10 die Netzwerkidentifikation NID B an eine Erfassungsstation 52, die über einen Übertragungspfad 54 mit der Stufe 50 verbunden ist.

Ferner meldet die Stufe 50 im Laufe der Zugriffserkennung nicht nur die Netzwerkidentifikation NID B, sondern auch Verwendungsinformationen VI an die Erfassungsstation 52. Derartige Verwendungsinformationen VI sind beispielsweise in einem Speicher 56 in der Anwenderstation 14₂ ebenfalls abgespeichert.

Derartige Verwendungsinformationen VI enthalten einerseits Informationen in welcher Art und Weise der Nutzerdatensatz 10 verwendet wird, die Verwendungsinformationen VI umfassen vorzugsweise ebenfalls Anwenderinformationen, das heißt Informationen über die Person des Anwenders, insbesondere eine Anwenderidentifikation oder auch Informationen über Anwenderaktivitäten im Zusammenhang mit dem Nutzerdatensatz 10.

Ein Beispiel einer Anwendung des erfindungsgemäßen Verfahrens wäre die zur Verfügungsstellung und Abrechnung von Filmen von Video-on-Demand-Diensten oder virtuellen Videotheken. Bei diesen werden die Filme als Nutzerdatensatz 10 über das Netzwerksystem 16 übermittelt, wobei das Interesse der Inhaber der einzelnen Broadcastnetzwerke 20A bis 20D darin besteht, für die zur Verfügung gestellten Übertragungskapazitäten am Umsatz mit derartigen Filmen beteiligt zu werden.

Dadurch, dass nun die Stufe 50 zur Zugriffserkennung bei einem Zugriff auf den Nutzerdatensatz 10, das heißt in diesem Fall den Film, die letzte Netzwerkidentifikation NID B der Erfassungsstation 52 weiter meldet, hat die Erfassungsstation 52 die Möglichkeit, über die Netzwerkidentifikation NID B zurückzuverfolgen, welche Broadcastnetzwerke 20 an der Übertragung des Nutzerdatensatzes 10 in Form des Films beteiligt waren, da der Erfassungsstelle die in Fig. 1 dargestellte Struktur des Netzwerksystems 16 bekannt ist.

Würde beispielsweise der Erfassungsstelle 52 die Netzwerkidentifikation NID C übermittelt, so wäre die Erfassungsstation 52 ebenfalls in der Lage, zu erkennen, dass das letzte, an der Übertragung des Nutzerdatensatzes 10 beteiligte Broadcastnetzwerk das dritte Broadcastnetzwerk 20C war und könnte somit ermitteln, dass bei der Übertragung zusätzlich auch das erste Broadcastnetzwerk 20A involviert war.

Würde beispielsweise der Erfassungsstelle 52 die Netzwerkidentifikation NID D übermittelt, so wäre die Erfassungsstation 52 in der Lage, aufgrund der Struktur des Netzwerksystems 16 zu erkennen, dass an der Übermittlung des Nutzerdatensatzes 10 in Form des Films nicht nur das vierte Broadcastnetzwerk 20D beteiligt war, sondern auch das dritte Broadcastnetzwerk 20C und zusätzlich noch das erste Broadcastnetzwerk 20A.

Als Übertragungspfad 54 wird dabei vorzugsweise der Pfad verwendet, der ohnehin von der Erfassungsstation 52 zur jeweiligen Anwenderstation 14₂ führt, um beispielsweise bei Videodiensten den Schlüssel für die im Nutzerdatensatz 10 verschlüsselte Videoinformation zu übermitteln und mit Übermittlung des Schlüssels auch gleichzeitig die Bezahlung für die Nutzung sicherzustellen.

Die Erfassungsstation kann dann zusätzlich noch mit dem Eigentümer 12 des Nutzerdatensatzes 10 kommunizieren, um die Abrechnung der Video-on-Demand-Dienste sicherzustellen, und außerdem noch mit den Eigentümern der Broadcastnetzwerke 20, um deren Vergütung ebenfalls sicherzustellen.

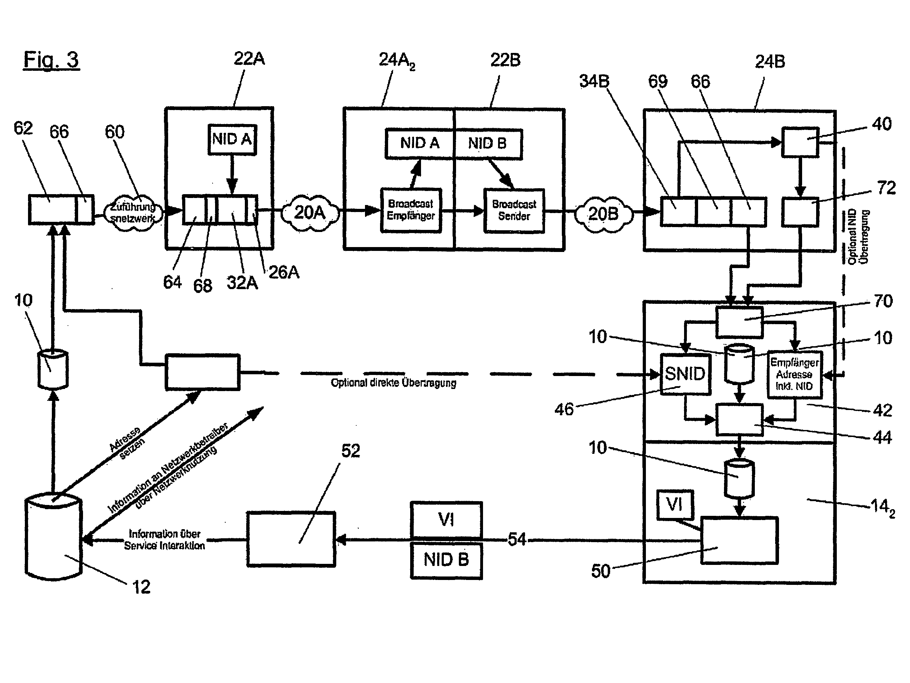

Bei einem zweiten Ausführungsbeispiel eines erfindungsgemäßen Verfahrens, dargestellt in Fig. 3, sind für dieselben Komponenten dieselben Bezugszeichen verwendet, so daß hinsichtlich der Beschreibung derselben vollinhaltlich auf die Ausführungen zum ersten Ausführungsbeispiel Bezug genommen wird.

Im Gegensatz zum ersten Ausführungsbeispiel wird der Nutzerdatensatz 10 bereits der Sendestation 22A des ersten Broadcastnetzwerks 20A mittelbar über ein Einspeisenetzwerk 60 zugeleitet. Aus diesem Grund wird der Nutzerdatensatz 10 bereits von einem Sender 62 des Einspeisenetzwerks 60 entsprechend einem Kommunikationsprotokoll des Einspeisenetzwerks 60, welches beispielsweise ein Standardprotokoll sein kann, in einen Netzwerkdatensatz 66 umgesetzt, und über den Sender 62 des Einspeisenetzwerks 60 zu einem Empfänger des Einspeisenetzwerks 60 übertragen, der in der Sendestation 22A des ersten Broadcastnetzwerks 20A angeordnet ist. Von dem Empfänger 64 wird dann der Netzwerkdatensatz 66 dem Sender 32A übergeben.

Auf den Empfänger 64 folgt noch ein Protokollkonverter 68, welcher den Netzwerkdatensatz 66 in den Broadcastdatensatz 26A entsprechend dem Kommunikationsprotokoll des ersten Broadcastnetzwerks 20A umsetzt.

Im übrigen verläuft die Übertragung zur Empfangsstation 24B des Broadcastnetzwerks 20B in gleicher Weise wie im Zusammenhang mit dem ersten Ausführungsbeispiel beschrieben und in derselben Weise erfolgt von dem Empfänger 34B die Extraktion der Netzwerkidentifikation NID B.

Auf den Empfänger 34B folgt noch ein Protokollkonverter 69, welcher den Broadcastdatensatz 26B wieder in den Netzwerkdatensatz 66 umsetzt, damit dieser wiederum im Standardprotokoll vorliegt.

Der Unterschied zum ersten Ausführungsbeispiel besteht darin, daß der Empfänger 34B der Empfängerstation 24 den Nutzerdatensatz 10 nicht unmittelbar zur Verfügung stellt, sondern als Netzwerkdatensatz 66, im Format des Standardprotokolls.

In diesem Format erfolgt eine Übertragung auf die Anwenderstation 14₂, welche mit einem Umsetzer 70 versehen ist, um aus dem Netzwerkdatensatz 66 den Nutzerdatensatz 10 zu erzeugen.

Um nun die im Speicher 40 gespeicherte letzte Netzwerkidentifikation NID B ebenfalls im Format des Standardprotokolls übertragen zu können, ist die Empfangsstation 24B mit einem Sender 72 versehen, welcher in der Lage ist, die letzte Netzwerkidentifikation NID B im Format des Standardprotokolls ebenfalls auf den Umsetzer 70 zu übertragen, der dann diese wiederum in die letzte Netzwerkidentifikation NID B umsetzt, um diese dem Filter 44 der Stufe 42 zur Verfügung zu stellen, der in gleicher Weise arbeitet wie beim ersten Ausführungsbeispiel beschrieben.

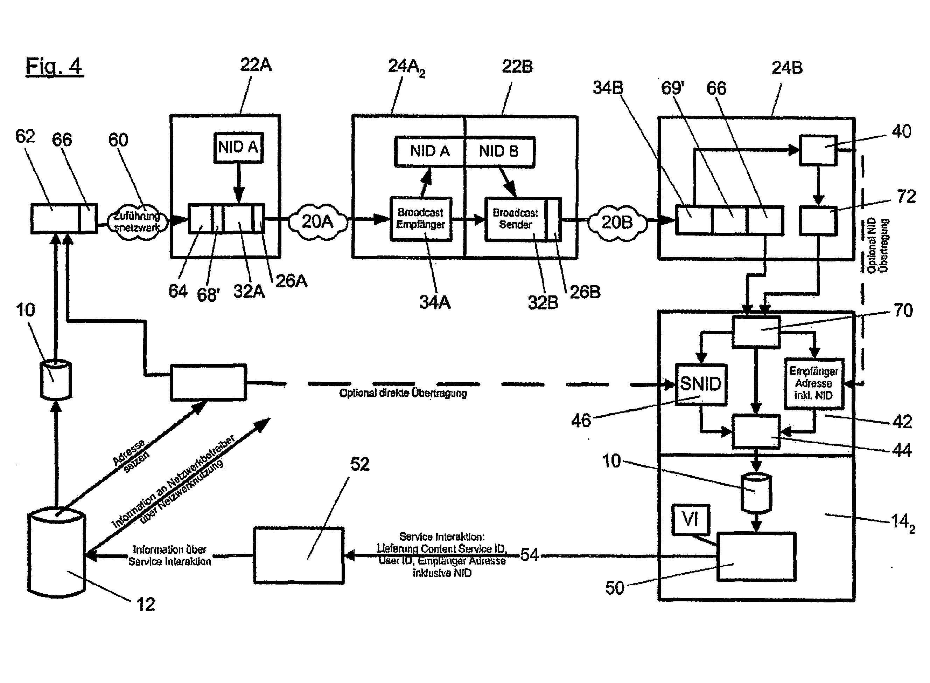

Bein einem dritten Ausführungsbeispiel, dargestellt in Fig. 4, sind diejenigen Elemente und Verfahrensschritte, die mit den vorangehenden Ausführungsbeispielen identisch sind, mit denselben Bezugszeichen versehen, so daß hinsichtlich der Beschreibung derselben vollinhaltlich auf die Ausführungen zu den voranstehenden Ausführungsbeispielen Bezug genommen werden kann.

Im Gegensatz zum zweiten Ausführungsbeispiel ist anstelle des Protokollkonverters 68 ein Verkapsler 68' vorgesehen, welcher den Netzwerkdatensatz 66 in den Broadcastdatensatz 26A umsetzt.

Ferner ist anstelle des Protokollkonverters 69 ein Entkapsler 69' vorgesehen, welcher den Broadcastdatensatz 26B wieder in den Netzwerkdatensatz 66 umsetzt.

Im übrigen funktioniert das dritte Ausführungsbeispiel in gleicher Weise wie das zweite Ausführungsbeispiel.

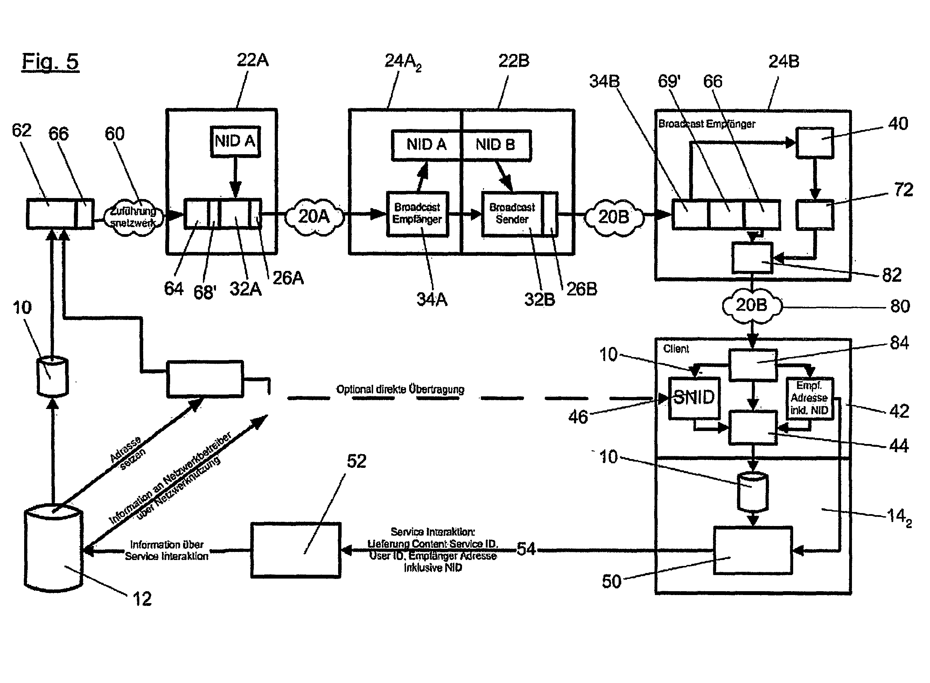

Bei einem vierten Ausführungsbeispiel, dargestellt in Fig. 5, wird ebenfalls hinsichtlich der einzelnen Elemente und Verfahrensschritte vollinhaltlich auf die Ausführungen zu den voranstehenden Ausführungsbeispielen Bezug genommen.

Bei dem vierten Ausführungsbeispiel des erfindungsgemäßen Verfahrens gemäß Fig. 5 erfolgt abweichend vom dritten Ausführungsbeispiel eine Übertragung des in der Empfangsstation 24B des Broadcastnetzwerks 20 B vorliegenden Netzwerkdatensatzes 66 mittelbar über ein Anwendernetzwerk 80 durch einen in der Empfangsstation 24B vorgesehenen Sender 82 und einen in der Anwenderstation 14₂ vorgesehenen Empfänger 84 für den Netzwerkdatensatz 66.

Im übrigen funktioniert das vierte Ausführungsbeispiel in gleicher Weise wie das zweite Ausführungsbeispiel.

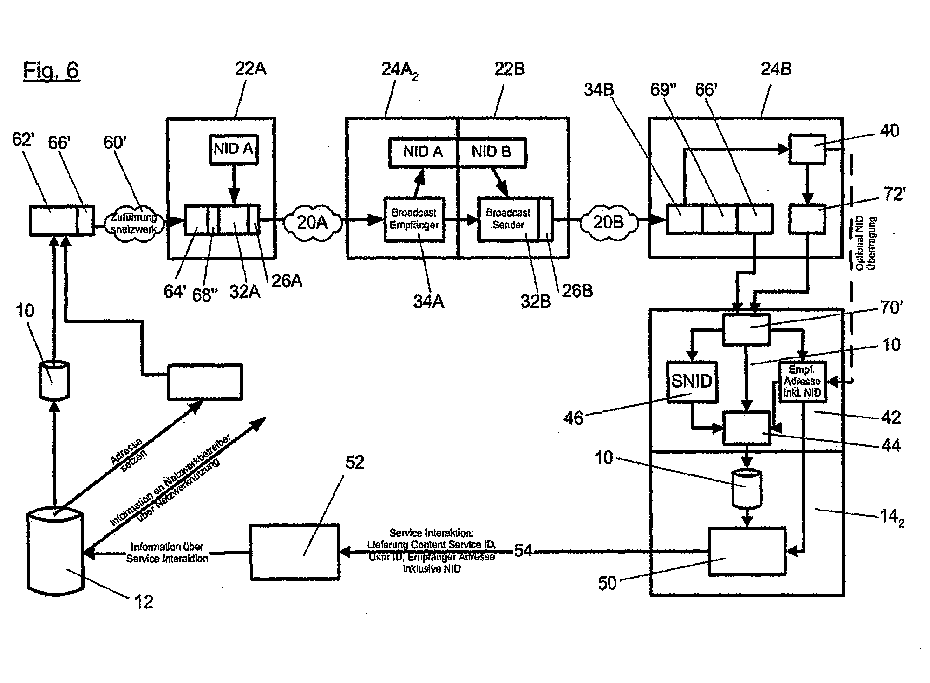

Bei einem fünften Ausführungsbeispiel, dargestellt in Fig. 6, arbeitet das Einspeisenetzwerk 60' nicht auf der Basis des Standardprotokolls sondern auf der Basis des Internetprotokolls, so daß der Sender 62' EINEN Internetdatensatz 66' zum Empfänger 64' überträgt.

Der Internetdatensatz 66' wird dann durch einen Verkapsler 68" zu dem Broadcastdatensatz 26A konvertiert.

In gleicher Weise ist in der Empfangsstation 24B ein Entkapsler 69" vorgesehen, welcher aus dem Broadcastdatensatz 26B den Internetdatensatz 66' wieder herstellt.

Ferner ist zur Übertragung der Netzwerkidentifikation NID B ein Sender 72' vorgesehen, welcher die Netzwerkidentifikation NID B auf einen auf der Basis des Internetprotokolls arbeitenden Umsetzer 70' überträgt.

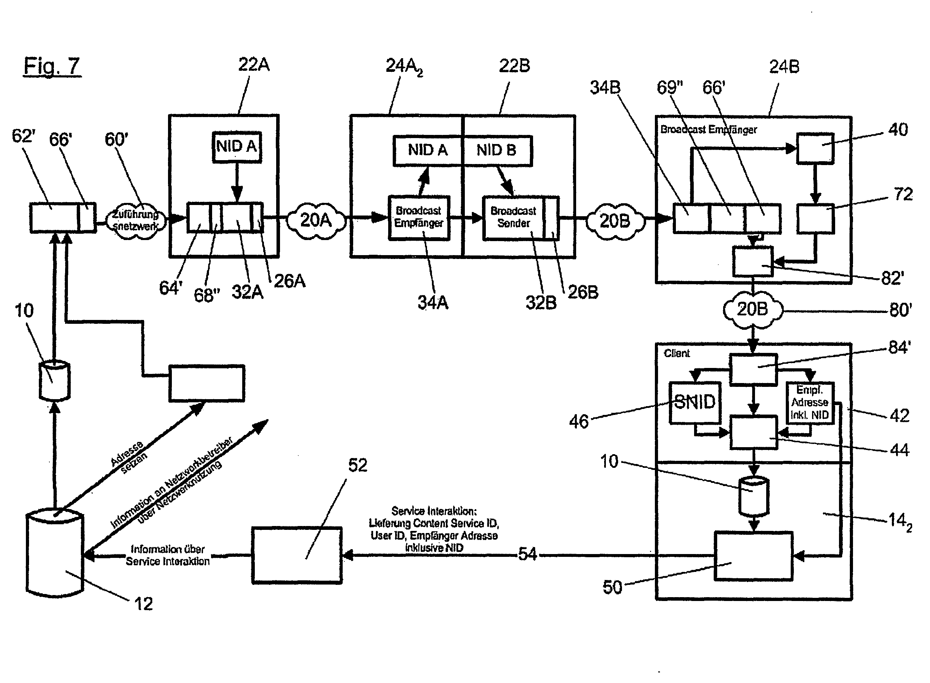

Bei einem sechsten Ausführungsbeispiel, dargestellt in Fig. 7, wird ebenfalls auf die voranstehenden Ausführungsbeispiele insoweit, als diese identisch sind, vollinhaltlich Bezug genommen.

Im Gegensatz zum fünften Ausführungsbeispiel, dargestellt in Fig. 6, ist ein Anwendernetzwerk 80' vorgesehen, welches zur mittelbaren Übertragung des Internetdatensatzes 66' dient, mit einem Sender 82' auf Seiten der Empfangsstation 24B und einem Empfänger 84' auf Seiten der Anwenderstation 14₂.

Im übrigen funktioniert das sechste Ausführungsbeispiel in gleicher Weise wie das fünfte Ausführungsbeispiel.

Bei allen Broadcastnetzwerken 20 des Netzwerksystems 16 ist es möglich, analoge oder digitale Broadcastnetzwerke einzusetzen, mit einer entsprechenden Änderung des Kommunikationsprotokolls.

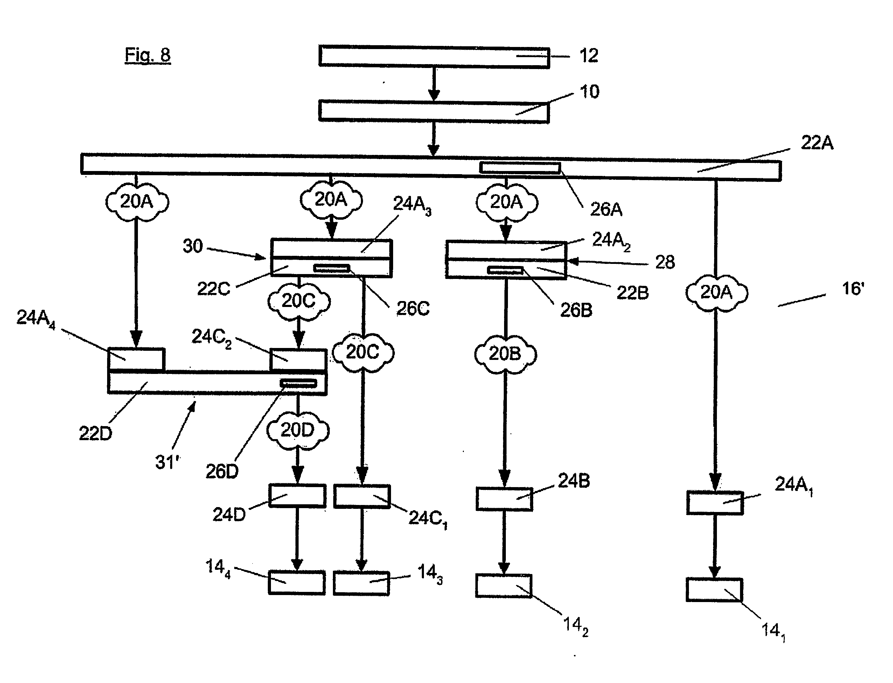

Bei einem zweiten Beispiel eines Netzwerksystems 16', dargestellt in Fig.8, sind die im Zusammenhang mit dem ersten Ausführungsbeispiel erläuterten Komponenten in gleicher Weise enthalten. Ergänzend dazu ist eine weitere Empfangsstation 24A₄ im Broadcastnetzwerk 20A vorgesehen, welche in diesem Fall aber Teil der Netzwerkübergangsstation 31' ist, in welcher zusätzlich zum Umsetzen des Broadcastdatensatzes 26C in einen Broadcastdatensatz 26D auch ein Empfangen des Broadcastdatensatzes 26A und Umsetzen desselben in einen Broadcastdatensatz 26D erfolgen kann, so daß das Netzwerk 16' den Broadcastdatensatz 26A entweder über die Netzwerkübergangsstation 30 zur Netzwerkübergangsstation 31' übermitteln kann oder direkt ohne Zwischenschaltung der Netzwerkübergangsstation 30 von der Sendestation 22A der Netzwerkübergangsstation 31' übermitteln kann.

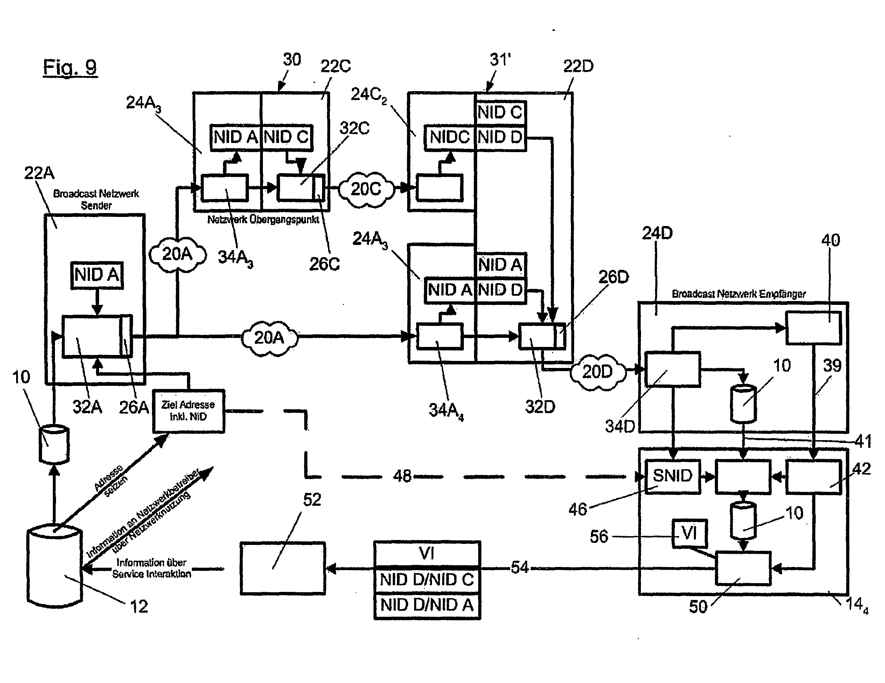

Damit ist in der Empfangsstation 24D, wie in Fig. 9 dargestellt, anhand der letzten Netzwerkidentifikation NID D nicht festzustellen, ob die Übertragung der Nutzerdaten 10 direkt von der Sendestation 22A zur Netzwerkübergangsstation 31' oder über die Netzwerkübergangsstation 30 erfolgte.

Aus diesem Grund wird bei dem in Fig. 9 dargestellten siebten Ausführungsbeispiel eines erfindungsgemäßen Verfahrens bei der Übertragung im vierten Broadcastnetzwerk 20D der Broadcastdatensatz 26D nicht nur mit der Netzwerkidentifikation des vierten Broadcastnetzwerks 20D, nämlich NID D versehen, sondern noch zusätzlich mit der vorhergehenden Netzwerkidentifikation NID C oder NID A, so daß dann in dem Speicher 40 nicht nur die vom Empfänger 34 D extrahierte Netzwerkidentifikation NID D, sondern zusätzlich die vorhergehende Netzwerkidentifikation, nämlich NID C oder NID A.

Mit dieser zusätzlichen Information ist somit eindeutig nachvollziehbar, über welches der Broadcastnetzwerke, nämlich 20A kombiniert mit 20D oder 20A kombiniert mit 20C und 20D der Nutzerdatensatz 10 übertragen wurde.

Im übrigen funktioniert das siebte Ausführungsbeispiel des erfindungsgemäßen Verfahrens in gleicher Weise wie das erste Ausführungsbeispiel gemäß Fig. 2, so dass für dieselben Komponenten dieselben Bezugszeichen verwendet wurden und hinsichtlich der Erläuterung weiterhin vollinhaltlich auf die Erläuterungen zum ersten Ausführungsbeispiel Bezug genommen wird.

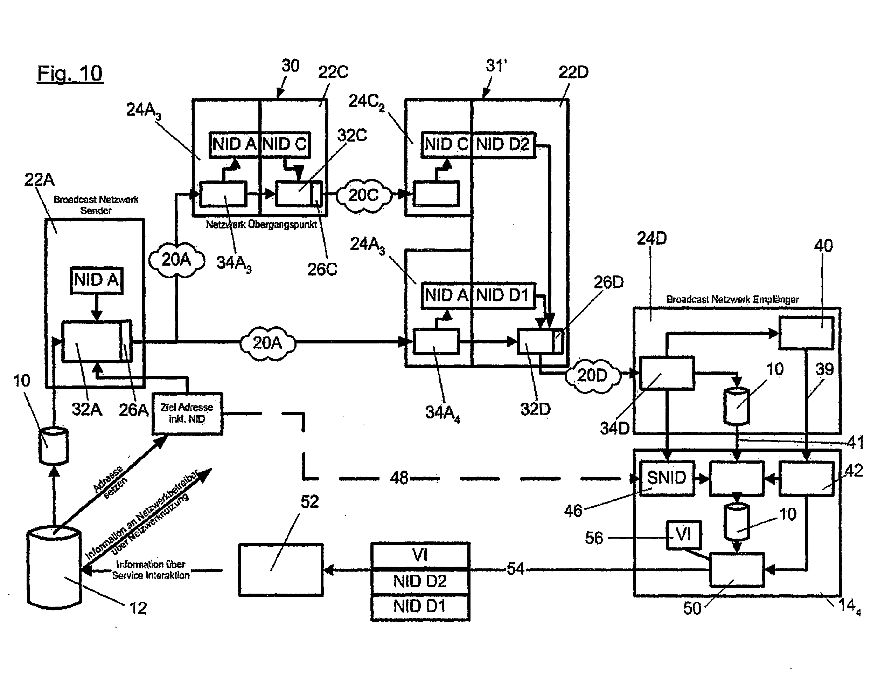

Bei einem achten Ausführungsbeispiel eines erfindungsgemäßen Verfahrens, dargestellt in Fig. 10, wird alternativ zum siebten Ausführungsbeispiel bei der Übertragung des Nutzerdatensatzes 10 über das Broadcastnetzwerk 20D abhängig davon, welches vorangehende Broadcastnetzwerk, nämlich das Broadcastnetzwerk 20A oder 20C der Nutzerdatensatz übertragen wurde, eine unterschiedliche Netzwerkidentifikation NID D1 oder NID D2 verwendet, so dass auf Seiten der Empfangsstation 24D und dann auch der Anwenderstation 14₄ die Möglichkeit besteht, nur aufgrund der letzten Netzwerkidentifikation NID D1 oder NID D2 zu erkennen, ob der Nutzerdatensatz 10 über das Broadcastnetzwerk 20A und das Broadcastnetzwerk 20D übertragen wurde oder über das Broadcastnetzwerk 20A kombiniert mit dem Broadcastnetzwerk 20C und dem Broadcastnetzwerk 20D.

Im übrigen arbeitet auch das achte Ausführungsbeispiel in gleicher Weise wie das erste Ausführungsbeispiel gemäß Fig. 2, so dass für alle anderen Komponenten dieselben Bezugszeichen verwendet wurden und vollinhaltlich auf die Ausführungen zum ersten Ausführungsbeispiel Bezug genommen wird.

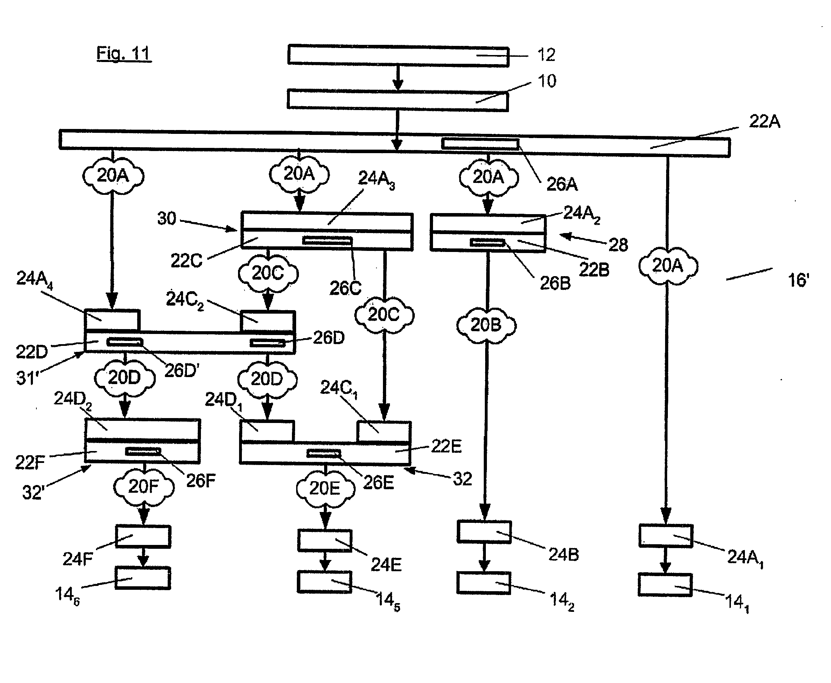

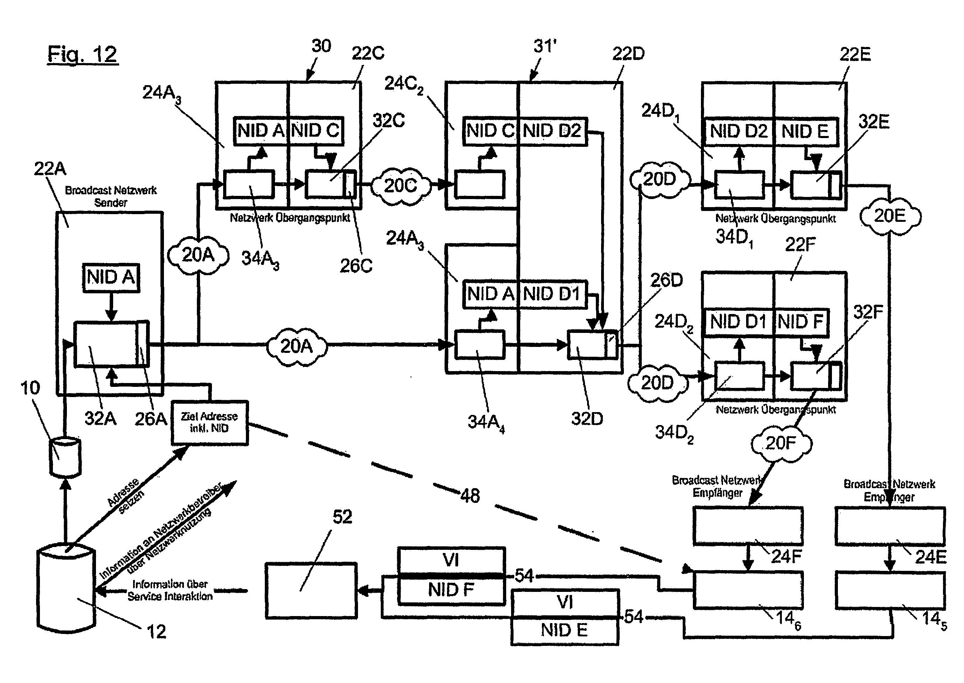

Bei einem neunten Ausführungsbeispiel eines erfindungsgemäßen Verfahrens, dargestellt in Fig. 11 und Fig. 12 wird wie im vorherigen achten Ausführungsbeispiel bei der Übertragung des Nutzerdatensatzes 10 über das Broadcastnetzwerk 20D abhängig davon, welches vorangehende Broadcastnetzwerk, nämlich das Broadcastnetzwerk 20A oder 20C der Nutzerdatensatz übertragen wurde, eine unterschiedliche Netzwerkidentifikation NID D1 oder NID D2 verwendet. Anders als im achten Ausführungsbeispiel werden diese unterschiedlichen Netzwerkidentifikationen benutzt, um unterschiedliche Broadcastdatensätze 26D und 26D' zu erzeugen für die Übertragung in weitere Broadcastnetze, so dass jeweils in einer Empfangsstation 24D₁ einer Netzwerkübergangsstation 32 und in einer Empfangsstation 24D₂ einer Netzwerkübergangsstation 32' anhand der Netzwerkidentifikation der für das jeweils zugeordnete Netzwerk 20E beziehungsweise 20F gefiltert und weitergeleitet wird. Dies ist besonders vorteilhaft, wenn es sich bei 20D um ein Broadcastnetzwerk handelt und diese Broadcastdatensätze mit dem Nutzerdatensatz beispielsweise über verschiedene Kanäle übertragen werden.

Im übrigen arbeitet auch das neunte Ausführungsbeispiel in gleicher Weise wie das erste Ausführungsbeispiel gemäß Fig. 2, so dass für alle anderen Komponenten dieselben Bezugszeichen verwendet wurden und vollinhaltlich auf die Ausführungen zum ersten Ausführungsbeispiel Bezug genommen wird.

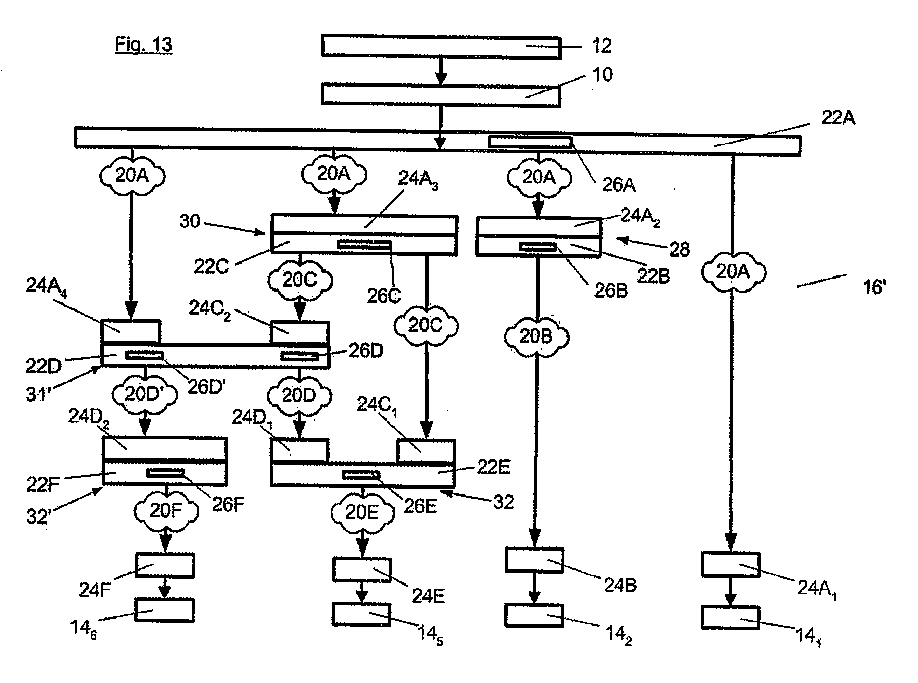

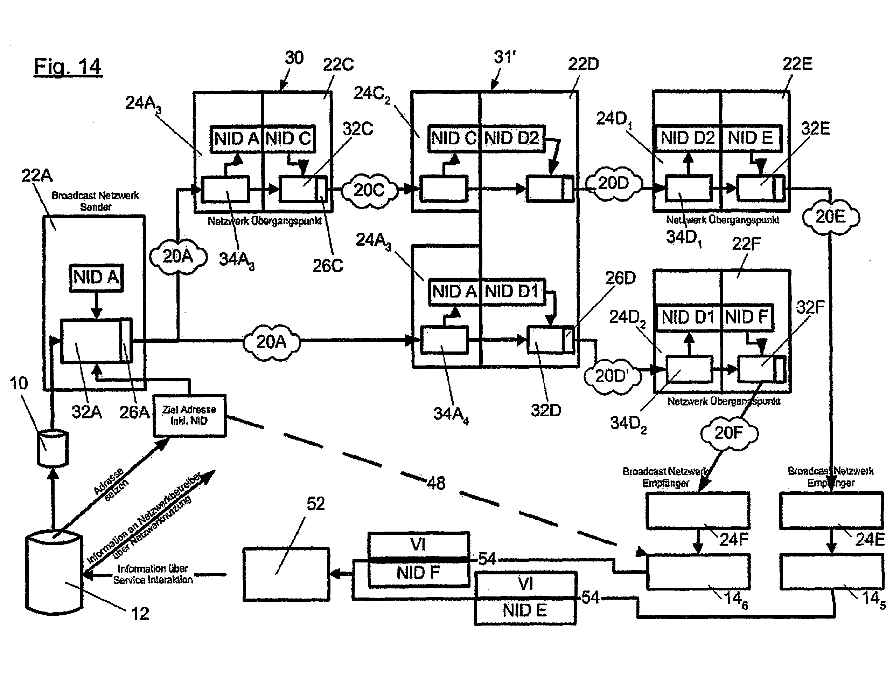

Bei einem zehnten Ausführungsbeispiel eines erfindungsgemäßen Verfahrens, dargestellt in Fig. 13 und Fig. 14 wird wie im vorherigen neunten Ausführungsbeispiel bei der Übertragung des Nutzerdatensatzes 10 über das Broadcastnetzwerk 20D abhängig davon, welches vorangehende Broadcastnetzwerk, nämlich das Broadcastnetzwerk 20A oder 20C der Nutzerdatensatz übertragen wurde, eine unterschiedliche Netzwerkidentifikation NID D1 oder NID D2 verwendet. Anders als im neunten Ausführungsbeispiel werden diese unterschiedlichen Netzwerkidentifikationen in der Netzwerkübergangsstation 31' benutzt, um den Nutzerdatensatz über jeweils unterschiedliche Netzwerke 20D und 20D' in weitere Netzwerke 20E und 20F zu übertragen. Dies ist besonders vorteilhaft, wenn es sich bei 20D und 20D' um bidirektionale Netzwerke oder um Netzwerke unterschiedlichen Typs und bei 20E und 20F um Broadcastnetzwerke handelt.

Im übrigen arbeitet auch das zehnte Ausführungsbeispiel in gleicher Weise wie das erste Ausführungsbeispiel gemäß Fig. 2, so dass für alle anderen Komponenten dieselben Bezugszeichen verwendet wurden und vollinhaltlich auf die Ausführungen zum ersten Ausführungsbeispiel Bezug genommen wird.

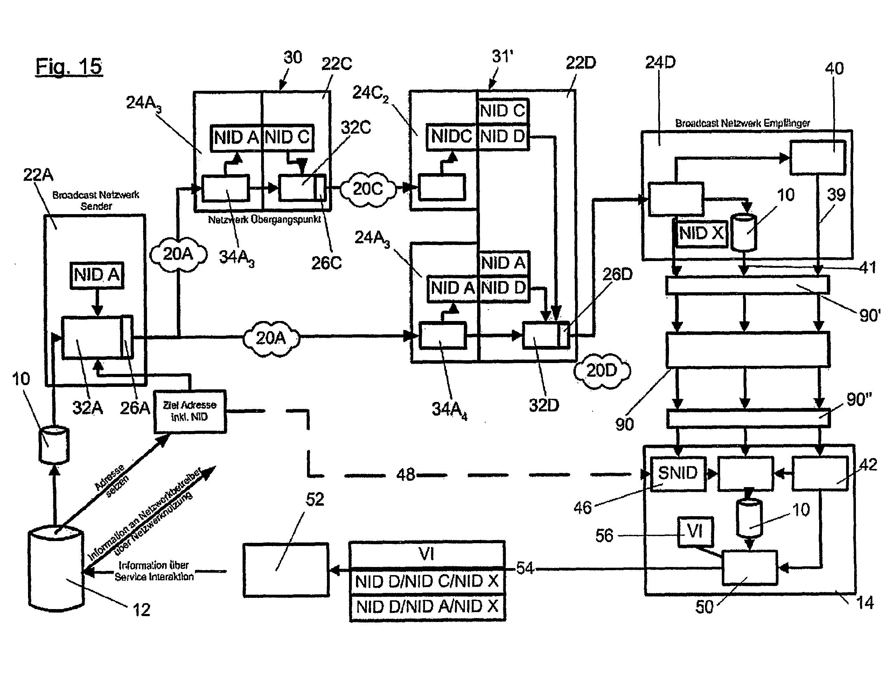

Bei einem elften Ausführungsbeispiel dargestellt in Fig.15 wird für die Darstellung beispielsweise von einer Konstellation wie beim achten Ausführungsbeispiel ausgegangen. Jedoch lässt sich das in diesem Beispiel beschriebene erfindungsgemäße Verfahren auch auf alle anderen vorhergegangen Ausführungsbeispiele anwenden. Anders als im achten Beispiel sind hier die Empfangsstation 24D und die Anwenderstation 14 zwei getrennte Geräte, die auch nicht durch ein physikalisches Netzwerk miteinander verbunden sind. Die Übertragung des Nutzerdatensatzes von der Empfangsstation 24D an die Anwenderstation 14 erfolgt über einen physikalischen Datenträger 90 wie zum Beispiel eine Diskette, eine CD, ein Flash-Speicher oder ein anderes, auch zukünftiges Speichermedium. Der Nutzerdatensatz wird von der Empfangsstation 24D über eine Standardschnittstelle 90', beispielsweise ein Diskettenlaufwerk, ein optisches Laufwerk, eine USB-Schnittstelle oder eine andere Standardschnittstelle auf den physikalischen Datenträger übertragen und über eine entsprechende Schnittstelle 90" in der Anwenderstation 14 auf diese übertragen. Dabei erzeugt die Empfangsstation 24D eine weitere NID X, die zur Identifikation dieses "virtuellen" Netzwerkes in der Form der Übertragung durch einen physikalischen Datenträger dient und die zusammen mit der letzten Netzwerkidentifikation oder einer zusammengesetzten Netzwerkidentifikation wie im achten Ausführungsbeispiel an die Erfassungsstation 52 übertragen wird.

Mit dieser zusätzlichen Information ist somit eindeutig nachvollziehbar, über welches der Broadcastnetzwerke und über welche Empfangsstation der Nutzerdatensatz 10 an die Anwenderstation übertragen wurde.

Im übrigen funktioniert das elfte Ausführungsbeispiel des erfindungsgemäßen Verfahrens in gleicher Weise wie das erste Ausführungsbeispiel gemäß Fig. 2, so dass für dieselben Komponenten dieselben Bezugszeichen verwendet wurden und hinsichtlich der Erläuterung weiterhin vollinhaltlich auf die Erläuterungen zum ersten Ausführungsbeispiel Bezug genommen wird.

## Patentansprüche

1. Verfahren zum Übermitteln eines Nutzerdatensatzes an eine Anwenderstation (14) umfassend folgende Schritte:
Übertragen des Nutzerdatensatzes (10) als Broadcastdatensatz (26) über ein Netzwerksystem (16), umfassend mindestens zwei zur Datenübertragung geeignete Netzwerke (20), von denen mindestens eines als Broadcastnetzwerk ausgebildet ist, bei welchen vor dem Übertragen in dem jeweiligen Broadcastnetzwerk (20) eine Netzwerkidentifikation (NID) des zum Übertragen eingesetzten Broadcastnetzwerks (20) dem Broadcastdatensatz (26) hinzugefügt wird,
Extrahieren mindestens der zuletzt zu dem Broadcastdatensatz (26) hinzugefügten Netzwerkidentifikation (NID B) beim Empfang des zuletzt genutzten Broadcastdatensatzes (26B) aus diesem Broadcastdatensatz (26B) und
Weiterleiten mindestens der letzten Netzwerkidentifikation (NID B) an die Anwenderstation (14) zur Berücksichtigung mindestens der letzten Netzwerkidentifikation (NID B) im Zusammenhang mit der Verwendung des Nutzerdatensatzes (10).

2. Verfahren nach Anspruch 1, **dadurch gekennzeichnet, daß** das Netzwerksystem (16) mindestens zwei zur Datenübertragung aufeinanderfolgende und/oder parallele Broadcastnetzwerke (20) aufweist.

3. Verfahren nach Anspruch 1 oder 2, **dadurch gekennzeichnet, dass** die Berücksichtigung der letzten Netzwerkidentifikation (NID B) im Zusammenhang mit der Verwendung des Nutzerdatensatzes (10) einen Vergleich der letzten Netzwerkidentifikation (NID B) mit einer der Anwenderstation (14) vorgegebenen Netzwerkidentifikation (SNID) zur Entscheidung über die Freigabe des Nutzerdatensatzes (10) für die Anwenderstation (14) umfaßt.

4. Verfahren nach Anspruch 3, **dadurch gekennzeichnet, dass** die Entscheidung über die Freigabe des Nutzerdatensatzes positiv ist, wenn die letzte Netzwerkidentifikation (NID B) mit der vorgegebenen Netzwerkidentifikation (SNID) übereinstimmt.

5. Verfahren nach Anspruch 3 oder 4, **dadurch gekennzeichnet, dass** die Entscheidung über die Freigabe des Nutzerdatensatzes (10) durch eine einem Zugriff auf den Nutzerdatensatz (10) vorgeschaltete Filterfunktion (44) erfolgt.

6. Verfahren nach einem der Ansprüche 3 bis 5, **dadurch gekennzeichnet, dass** die vorgegebene Netzwerkidentifikation (SNID) über das Netzwerksystem (16) übertragen wird.

7. Verfahren nach einem der Ansprüche 3 bis 5, **dadurch gekennzeichnet, dass** die vorgegebene Netzwerkidentifikation (SNID) über einen von dem Netzwerksystem (16) separaten Pfad (48) übertragen wird.

8. Verfahren nach einem der voranstehenden Ansprüche, **dadurch gekennzeichnet, dass** zusätzlich zur letzten Netzwerkidentifikation (NID D) mindestens eine weitere vorausgehende Netzwerkidentifikation (NID A) aus dem Broadcastdatensatz (26D) extrahiert und an die Anwenderstation (14₄) weitergeleitet wird.

9. Verfahren nach einem der voranstehenden Ansprüche, **dadurch gekennzeichnet, dass** die dem Broadcastdatensatz (26D) hinzugefügte Netzwerkidentifikation (NID D1, NID D2) eine Identifikation mindestens eines vorangehend genutzten Broadcastnetzwerks (20) zuläßt.

10. Verfahren nach einem der voranstehenden Ansprüche, **dadurch gekennzeichnet, dass** das Weiterleiten mindestens der letzten Netzwerkidentifikation (NID B, NID D1) zu einer Anwenderstation (14) das Übertragen derselben als eigenständige Information umfaßt.

11. Verfahren nach Anspruch 10, **dadurch gekennzeichnet, dass** das Weiterleiten mindestens der letzten Netzwerkidentifikation (NID B) über einen eigenen Übertragungspfad (39) erfolgt.

12. Verfahren nach Anspruch 10, **dadurch gekennzeichnet, dass** das Weiterleiten mindestens der letzten Netzwerkidentifikation (NID B) über einen Übertragungspfad (41) für den Nutzerdatensatz (10) erfolgt.

13. Verfahren nach einem der voranstehenden Ansprüche, **dadurch gekennzeichnet, dass** die Berücksichtigung mindestens der letzten Netzwerkidentifikation (NID B) im Zusammenhang mit der Verwendung des Nutzerdatensatzes (10) eine Weiterleitung mindestens der letzten Netzwerkidentifikation (NID B) an eine Erfassungsstation (52) für die Verwendung des Nutzerdatensatzes (10) im Fall eines Zugriffs auf den Nutzerdatensatz (10) durch die Anwenderstation (14) umfaßt.

14. Verfahren nach Anspruch 13, **dadurch gekennzeichnet, dass** die Weiterleitung mindestens der letzten Netzwerkidentifikation (NID B) an die Erfassungsstation (52) zusammen mit Verwendungsinformationen (VI) der Anwenderstation (14) erfolgt.

15. Verfahren nach Anspruch 14, **dadurch gekennzeichnet, dass** Verwendungsinformationen (VI) Informationen über den Nutzerdatensatz (10) und/oder Anwenderinformationen umfassen.

16. Verfahren nach Anspruch 15, **dadurch gekennzeichnet, dass** die Anwenderinformation eine Anwenderidentifikation ist und/oder dass die Anwenderinformation Informationen über Anwenderaktivitäten umfaßt.

17. Verfahren nach einem der Ansprüche 13 bis 16, **dadurch gekennzeichnet, dass** die Weiterleitung mindestens der letzten Netzwerkidentifikation (NID B) an die Erfassungsstation (52) über einen von dem Netzwerksystem (16) separaten Übertragungspfad (54) erfolgt.

18. Verfahren nach einem der Ansprüche 13 bis 17, **dadurch gekennzeichnet, dass** die Erfassungsstation (52) mindestens die letzte Netzwerkidentifikation (NID B) und die Verwendungsinformationen (VI) auswertet.

19. Verfahren nach einem der Ansprüche 13 bis 17, **dadurch gekennzeichnet, dass** die Erfassungsstation (52) mindestens die letzte Netzwerkidentifikation (NID B) zumindest mit Teilen der Verwendungsinformationen (VI) weiterleitet.

20. Verfahren nach einem der Ansprüche 13 bis 19, **dadurch gekennzeichnet, dass** die Erfassungsstation (52) mit der Anwenderstation (14) hinsichtlich einer Autorisierung zur Verwendung des Nutzerdatensatzes (10) kommuniziert.

21. Verfahren nach einem der voranstehenden Ansprüche, **dadurch gekennzeichnet, dass** die Berücksichtigung mindestens der bis dahin letzten Netzwerkidentifikation (NID D1 bzw. NID D2) bei der Erstellung eines Broadcastdatensatzes für die Weiterleitung in unterschiedliche Netzwerke des Netzwerksystems von der jeweiligen nachgeschalteten Empfangsstation einer Netzwerkübergangsstation zur Identifizierung benutzt wird und eine Übertragung in dem zu dieser Netzwerkübergangsstation gehörigen Netzwerk davon abhängig ist, wobei die Abhängigkeit vordefiniert sein kann.

22. Verfahren nach einem der Ansprüche 1 bis 20, **dadurch gekennzeichnet, dass** mindestens die bis dahin letzte Netzwerkidentifikation (NID D1 bzw. NID D2) in einer Netzwerkübertragungsstation für die Übertragung in unterschiedliche Netzwerke des Netzwerksystems, die von dieser Netzwerkübertragungsstation ausgehen, zur Identifizierung benutzt wird und eine Übertragung in das jeweilige Netzwerk davon abhängig ist, wobei die Abhängigkeit vordefiniert sein kann.

23. Verfahren nach einem der voranstehenden Ansprüche, **dadurch gekennzeichnet, dass** es sich bei wenigstens einem Netzwerk um ein bidirektionales Netzwerk, insbesondere um ein Netzwerk nach dem TCP/IP Standard, handelt.

24. Verfahren nach einem der Ansprüche 16 bis 23, **dadurch gekennzeichnet, daß** es sich bei dem Übertragungspfad (54) um ein Netzwerk nach dem TCP/IP Standard handelt.

25. Verfahren nach einem der voranstehenden Ansprüche, **dadurch gekennzeichnet, dass** es sich bei wenigstens einem Broadcastnetzwerk um ein digitales Broadcastnetzwerk handelt.

26. Verfahren nach einem der voranstehenden Ansprüche, **dadurch gekennzeichnet, dass** es sich bei wenigstens einem Broadcastnetzwerk um ein digitales Broadcastnetzwerk nach dem DVB Standard handelt.

27. Verfahren nach einem der voranstehenden Ansprüche, **dadurch gekennzeichnet, dass** eine Empfangsstation und die Anwenderstation des Teilnehmers zwei physikalisch getrennte Geräte sind, die auch nicht über ein Netzwerk miteinander verbunden sind, wobei der Nutzerdatensatz über ein Speichermedium und dafür vorgesehene Schnittstellen in der Empfangsstation sowie in der Anwenderstation von der Empfangsstation zur Anwenderstation übertragen wird.

28. Verfahren nach Anspruch 27, **dadurch gekennzeichnet, dass** das Speichermedium ein Flashspeicher ist.

29. Verfahren nach Anspruch 27 oder 28, **dadurch gekennzeichnet dass** die Schnittstelle eine USB Schnittstelle ist.

## Claims

1. Method of sending a user data set to a user station (14) comprising the following steps:
transmitting the user data set (10) as a broadcast data set (26) through a network system (16), comprising at least two networks (20) suitable for data transmission, at least one of which is in the form of a broadcast network, wherein before the transmission, in the respective broadcast network (20), a network identification (NID) of the broadcast network (20) used for the transmission is added to the broadcast data set (26),
extracting at least the network identification (NIDB) added last to the broadcast data set (26) on receiving the broadcast data set (26B) last used from this broadcast data set (26B) and
conveying at least the last network identification (NIDB) to the user station (14) to take account of at least the last network identification (NIDB) in conjunction with the use of the user data set (10).

2. Method according to claim 1, **characterised in that** the network system (16) comprises at least two sequential and/or parallel broadcast networks (20) for data transmission.

3. Method according to claim 1 or 2, **characterised in that** the consideration of the last network identification (NIDB) in conjunction with the use of the user data set (10) comprises a comparison of the last network identification (NIDB) with a network identification (SNID) previously notified to the user station (14) for deciding whether to release the user data set (10) for the user station (14).

4. Method according to claim 3, **characterised in that** the decision whether to release the user data set is in the affirmative if the last network identification (NIDB) corresponds to the previously notified network identification (SNID).

5. Method according to claim 3 or 4, **characterised in that** the decision whether to release the user data set (10) is taken by a filter function (44) which precedes any access to the user dataset (10).

6. Method according to one of claims 3 to 5, **characterised in that** the previously notified network identification (SNID) is transmitted through the network system (16).

7. Method according to one of claims 3 to 5, **characterised in that** the previously notified network identification (SNID) is transmitted through a pathway (48) which is separate from the network system.

8. Method according to one of the preceding claims, **characterised in that** in addition to the last network identification (NIDD) at least one other preceding network identification (NIDA) is extracted from the broadcast data set (26D) and passed on to the user station (14₄).

9. Method according to one of the preceding claims, **characterised in that** the network identification (NIDD1, NIDD2) added to the broadcast data set (26D) permits identification of at least one previously used broadcast network (20).

10. Method according to one of the preceding claims, **characterised in that** the conveying of at least the last network identification (NIDB, NIDD1) to a user station (14) comprises transmitting the same as independent information.

11. Method according to claim 10, **characterised in that** the transmission of at least the last network identification (NIDB) takes place through a dedicated transmission pathway (39).

12. Method according to claim 10, **characterised in that** the transmission of at least the last network identification (NIDB) takes place through a transmission pathway (41) for the user data set (10).

13. Method according to one of the preceding claims, **characterised in that** the consideration of at least the last network identification (NIDB) in conjunction with the use of the user data set (10) comprises transmitting at least the last network identification (NIDB) to a detector station (52) for the use of the user data set (10) in the event of access to the user data set (10) by the user station (14).

14. Method according to claim 13, **characterised in that** the transmission of at least the last network identification (NIDB) to the detector station (52) takes place together with usage information (VI) of the user station (14).

15. Method according to claim 14, **characterised in that** usage information (VI) comprises information regarding the user data set (10) and/or user information.

16. Method according to claim 15, **characterised in that** the user information is a user identification and/or the user information comprises information on user activities.

17. Method according to one of claims 13 to 16, **characterised in that** the transmission of at least the last network identification (NIDB) to the detector station (52) takes place through a transmission pathway (54) which is separate from the network system (16).

18. Method according to one of claims 13 to 17, **characterised in that** the detector station (52) evaluates at least the last network identification (NIDB) and the usage information (VI).

19. Method according to one of claims 13 to 17, **characterised in that** the detector station (52) conveys at least the last network identification (NIDB) at least with some of the usage information (VI).

20. Method according to one of claims 13 to 19, **characterised in that** the detector station (52) communicates with the user station (14) regarding authorisation to use the user data set (10).

21. Method according to one of the preceding claims, **characterised in that** the consideration of at least the last network identification up until then (NIDD 1 or NIDD2) when establishing a broadcast data set for transmitting into different networks of the network system is used by the respective downstream receiving station of a network transition station for identification and transmission in the network belonging to this network transition station is dependent thereon, this dependency optionally being defined beforehand.

22. Method according to one of claims 1 to 20, **characterised in that** at least the network identification which is the last up until then (NIDD1 or NIDD2) is used for identification in a network transmission station for transmission into different networks of the network system which start from this network transmission station, and transmission into the respective network is dependent thereon, the dependency optionally being defined beforehand.

23. Method according to one of the preceding claims, **characterised in that** at least one network is a bidirectional network, particularly a network by the TCP/IP standard.

24. Method according to one of claims 16 to 23, **characterised in that** the transmission pathway (54) is a network according to the TCP/IP standard.

25. Method according to one of the preceding claims, **characterised in that** at least one broadcast network is a digital broadcast network.

26. Method according to one of the preceding claims, **characterised in that** at least one broadcast network is a digital broadcast network according to the DVB standard.

27. Method according to one of the preceding claims, **characterised in that** a receiving station and the user station of the subscriber are two physically separate pieces of equipment which are not joined together even through a network, the user data set being transmitted through a memory medium and interfaces provided for this purpose in the receiving station and in the user station from the receiving station to the user station.

28. Method according to claim 27, **characterised in that** the memory medium is a flash memory.

29. Method according to claim 27 or 28, **characterised in that** the interface is a USB interface.

## Revendications

1. Procédé pour transmettre un enregistrement de données utilisateurs à une station utilisateurs (14) comprenant les étapes suivantes :
Transmission de l'enregistrement de données utilisateurs (10) comme enregistrement de données de diffusion (26) par l'intermédiaire d'un système de réseaux (16), comprenant au moins deux réseaux (20) appropriés pour la transmission de données, dont l'un au moins est conçu comme réseau de diffusion (20), avec lesquels est ajoutée avant la transmission dans le réseau de diffusion (20) respectif à l'enregistrement de diffusion (26) une identification de réseau (NID) du réseau de diffusion (29) utilisé pour la transmission,
Extraction au moins de l'identification de réseau (NID B) ajoutée en dernier à l'enregistrement de diffusion (26) lors de la réception de l'enregistrement de diffusion utilisé en dernier (26B) hors de ce jeu d'enregistrements de diffusion (26B) et
Réacheminement de la dernière identification de réseau (NID B) au moins à la station utilisateurs (14) pour la prise en compte au moins de la dernière identification de réseau (NID B) en rapport avec l'utilisation de l'enregistrement de données utilisateurs (10).

2. Procédé selon la revendication 1, **caractérisé en ce que** le système de réseaux (16) présente au moins deux réseaux de diffusion (20) successifs et/ou parallèles pour la transmission de données.

3. Procédé selon la revendication 1 ou 2, **caractérisé en ce que** la prise en compte de la dernière identification de réseau (NID B) en rapport avec l'utilisation de l'enregistrement de données utilisateurs (10) comprend une comparaison de la dernière identification de réseau (NID B) avec une identification de réseau (SNID) prescrite à la station utilisateurs (14) pour la décision sur l'activation de l'enregistrement de données utilisateurs (10) pour la station utilisateurs (14).

4. Procédé selon la revendication 3, **caractérisé en ce que** la décision pour l'activation de l'enregistrement de données utilisateurs est positive, lorsque la dernière identification de réseau (NID B) coïncide avec l'identification de réseau prescrite (SNID).

5. Procédé selon la revendication 3 ou 4, **caractérisé en ce que** la décision pour l'activation de l'enregistrement de données utilisateurs (10) s'effectue grâce à une fonction de filtre (44) située an amont d'un accès à l'enregistrement de données utilisateurs (10).

6. Procédé selon l'une quelconque des revendications 3 à 5, **caractérisé en ce que** l'identification de réseau prescrite (SNID) est transmise par l'intermédiaire du système de réseaux (16).

7. Procédé selon l'une quelconque des revendications 3 à 5, **caractérisé en ce que** l'identification de réseau prescrite (SNID) est transmise par l'intermédiaire d'un chemin d'accès (48) séparé du système de réseaux (16).

8. Procédé selon l'une quelconque des revendications précédentes, **caractérisé en ce qu'**en plus de la dernière identification de réseau (NID D) est extraite de l'enregistrement de données de diffusion (26D) au moins une autre identification de réseau (NID A) préalable et réacheminée à la station utilisateurs (14₄).

9. Procédé selon l'une quelconque des revendications précédentes, **caractérisé en ce que** l'identification de réseau (NID D1, NID D2) ajoutée à l'enregistrement de données de diffusion (26D) permet une identification au moins d'un réseau de diffusion (20) utilisé en premier.

10. Procédé selon l'une quelconque des revendications précédentes, **caractérisé en ce que** le réacheminement de la dernière identification de réseau (NID B, NID D1) au moins vers une station utilisateurs (14) comprend la transmission de celle-ci comme information propre.

11. Procédé selon la revendication 10, **caractérisé en ce que** le réacheminement de la dernière identification de réseau au moins (NID B) s'effectue par l'intermédiaire d'un chemin d'accès de transmission propre (39).

12. Procédé selon la revendication 10, **caractérisé en ce que** le réacheminement de la dernière identification de réseau au moins (NID B) s'effectue par l'intermédiaire d'un chemin d'accès de transmission (41) pour l'enregistrement de données utilisateurs (10).

13. Procédé selon l'une quelconque des revendications précédentes, **caractérisé en ce que** la prise en compte de la dernière identification de réseau au moins (NID B) en rapport avec l'utilisation de l'enregistrement de données utilisateurs (10) comprend un réacheminement de la dernière identification de réseau (NID B) au moins à une station de saisie (52) pour l'utilisation de l'enregistrement de données utilisateurs (10) dans le cas d'un accès à l'enregistrement de données utilisateurs (10) par la station utilisateurs (14).

14. Procédé selon la revendication 13, **caractérisé en ce que** le réacheminement de la dernière identification de réseau (NID B) au moins à la station de saisie (52) s'effectue conjointement avec des informations d'utilisation (VI) de la station utilisateurs (14).

15. Procédé selon la revendication 14, **caractérisé en ce que** les informations d'utilisation (VI) comprennent des informations sur l'enregistrement de données utilisateurs (10) et/ou des informations utilisateurs.

16. Procédé selon la revendication 15, **caractérisé en ce que** l'information utilisateurs est une identification utilisateurs et/ou l'information utilisateurs comprend des informations sur des activités utilisateurs.

17. Procédé selon l'une quelconque des revendications 13 à 16, **caractérisé en ce que** le réacheminement de la dernière identification de réseau (NID B) au moins à la station de saisie (52) s'effectue par un chemin d'accès de transmission (54) séparé du système de réseaux (16).

18. Procédé selon l'une quelconque des revendications 13 à 17, **caractérisé en ce que** la station de saisie (52) évalue au moins la dernière identification de réseau (NID B) et les informations d'utilisation (VI).

19. Procédé selon l'une quelconque des revendications 13 à 17, **caractérisé en ce que** la station de saisie (52) réachemine au moins la dernière identification de réseau (NID B) au moins avec des parties des informations d'utilisation (VI).

20. Procédé selon l'une quelconque des revendications 13 à 19, **caractérisé en ce que** la station de saisie (52) communique avec la station utilisateurs en ce qui concerne une autorisation pour l'utilisation de l'enregistrement de données utilisateurs (10).

21. Procédé selon l'une quelconque des revendications précédentes, **caractérisé en ce que** la prise en compte de la dernière identification de réseau (NID D1 ou NID D2) au moins est utilisé pour l'identification, lors de la création d'un enregistrement de données de diffusion pour le réacheminement dans différents réseaux du système de réseaux par la station de réception respective d'une station transitoire de réseau, située en aval et qu'une transmission dans le réseau appartenant à cette station transitoire de réseau dépend du fait que la dépendance peut être prédéfinie.

22. Procédé selon l'une quelconque des revendications 1 à 20, **caractérisé en ce qu'**au moins la dernière identification de réseau (NID D1 ou NID D2) est utilisée pour l'identification dans une station de transmission de réseau pour la transmission dans différents réseaux du système de réseaux, qui partent de cette station de transmission de réseau et qu'une transmission dans le réseau respectif dépend du fait que la dépendance peut être prédéfinie.

23. Procédé selon l'une quelconque des revendications précédentes, **caractérisé en ce qu'**il s'agit pour un réseau au moins d'un réseau bidirectionnel, en particulier d'un réseau selon le standard TCP/IP.

24. Procédé selon l'une quelconque des revendications 16 à 23, **caractérisé en ce qu'**il s'agit pour le chemin d'accès de transmission (54) d'un réseau selon le standard TCP/IP.

25. Procédé selon l'une quelconque des revendications précédentes, **caractérisé en ce qu'**il s'agit pour au moins un réseau de diffusion d'un réseau de diffusion numérique.

26. Procédé selon l'une quelconque des revendications précédentes, **caractérisé en ce qu'**il s'agit pour au moins un réseau de diffusion d'un réseau de diffusion numérique selon le standard DVB.

27. Procédé selon l'une quelconque des revendications précédentes, **caractérisé en ce qu'**une station de réception et la station utilisateurs du participant sont deux appareils physiquement séparés, qui ne sont pas non plus reliés ensemble par un réseau, sachant que l'enregistrement de données utilisateurs est transmis par l'intermédiaire d'un support de mémoire et d'interfaces prévues à cet effet dans la station de réception ainsi que dans la station utilisateurs par la station de réception vers la station utilisateurs.

28. Procédé selon la revendication 27, **caractérisé en ce que** le support de mémoire est une mémoire flash.

29. Procédé selon la revendication 27 ou 28, **caractérisé en ce que** l'interface est une interface USB.
